(19) **Europäisches Patentamt / European Patent Office / Office européen des brevets**

(11) **EP 3 998 431 B1**

(12) **EUROPEAN PATENT SPECIFICATION**

(45) Date of publication and mention of the grant of the patent:
**20.03.2024  Bulletin 2024/12**

(21) Application number: **19936640.2**

(22) Date of filing: **10.07.2019**

(51) International Patent Classification (IPC):
*F24D 11/02* (2006.01)     *F24H 4/04* (2006.01)
*F24H 7/04* (2006.01)     *F24D 19/10* (2006.01)

(52) Cooperative Patent Classification (CPC):
**F24D 11/0214; F24D 19/1039; F24H 4/04;**
**F24H 7/04;** F24D 2200/123; F24D 2200/16;
F24D 2200/20; Y02B 10/70

(86) International application number:
**PCT/JP2019/027275**

(87) International publication number:
**WO 2021/005735 (14.01.2021 Gazette 2021/02)**

(54) **HEAT RECOVERY DEVICE**

WÄRMERÜCKGEWINNUNGSVORRICHTUNG

DISPOSITIF DE RÉCUPÉRATION DE CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.05.2022  Bulletin 2022/20**

(73) Proprietor: **Mitsubishi Electric Corporation**
**Tokyo 100-8310 (JP)**

(72) Inventors:
• **NOMURA, Yasumitsu**
  **Tokyo 100-8310 (JP)**
• **SUZUKI, Shunkei**
  **Tokyo 100-8310 (JP)**
• **NAKAZONO, Junichi**
  **Tokyo 100-8310 (JP)**

(74) Representative: **Meissner Bolte Partnerschaft mbB**
**Patentanwälte Rechtsanwälte**
**Postfach 86 06 24**
**81633 München (DE)**

(56) References cited:
**WO-A1-2018/193658     JP-A- H11 211 270**
**JP-A- 2008 309 410     JP-A- 2014 156 987**
**JP-A- 2017 194 248**

• **Noboru , Mitsubishi Yuka Engineering Co., Ltd.: "Heat storage technology and polymers", High molecular, vol. 45, no. 5, 1 May 1996 (1996-05-01), pages 321-325, XP055877937, ISSN: 0454-1138, DOI: 10.1295/kobunshi.45.321**

**Description**

TECHNICAL FIELD

The present invention relates to a heat recovery apparatus that recovers heat from a terminal that utilizes heat.

BACKGROUND ART

Various heat recovery apparatuses have been proposed for recovering residual heat of heating or other operation. For example, Patent Literature 1 discloses a heat recovery apparatus that recovers heat from a remaining hot water in a bathtub with an improved efficiency. The heat recovery apparatus described in Patent Literature 1 includes a hot water storage tank for storing, as hot water, heat that is used when a user takes a shower or fills the bathtub with hot water, and a heat storage material for recovering residual heat of the bathtub. The heat recovery apparatus recovers residual heat of the bathtub by using latent heat of the heat storage material.

Patent Literature JP H11211270A discloses another heat recovery system for recovering exhaust heat from a bathtub, wherein a refrigerator uses a refrigerating cycle equipment to store heat recovered from bathtub water and outer air into a thermal storage tank filled with latent heat storage material.

CITATION LIST

PATENT LITERATURE

Patent Literature 1: Japanese Unexamined Patent Application Publication JP 2010-7935 A

SUMMARY OF THE INVENTION

TECHNICAL PROBLEM

However, in a general home, supply of hot water for shower and washing faces, hands and dishes is required for the number of family members, and supply of hot water for filling a bathtub is also required. In this case, a heat storage amount of about 60 to 70 mega-joules (MJ) is required during winter season. Meanwhile, a heat amount that can be recovered from a bathtub is about 10 MJ, and this amount is about one sixth to seventh of the required heat storage amount.

In general, when heat is stored by using latent heat of a heat storage material, the thermal capacity per volume is large, compared with a case where heat is stored by hot water (that is, a case of sensible heat storage). Therefore, when the same amount of heat is stored, a smaller volume is required in latent heat storage utilizing latent heat of a heat storage material, compared with a case of sensible heat storage utilizing hot water.

However, because the heat recovery apparatus described in Patent Literature 1 uses a heat storage material utilizing latent heat for recovering heat from a bathtub, that is, for storing a heat of 10 MJ, a large heat storage tank is required for supplying hot water for a heat amount of 70 MJ. Consequently, it is difficult to reduce the size of the entire apparatus.

The present invention has been made to solve the problem described above, and has an object to provide a heat recovery apparatus with a reduced size.

SOLUTION TO THE PROBLEM

A heat recovery apparatus according to the present invention is defined in claim 1 and is configured to recover residual heat of a terminal that is connected to the heat recovery apparatus and utilizes heat. The heat recovery apparatus includes a terminal circuit to which the terminal is connected and configured to supply heat to the terminal by allowing terminal fluid to circulate in the terminal circuit, a recovery circuit in which recovery fluid circulates and configured to recover residual heat of the terminal, a heat source circuit in which refrigerant circulates and configured to generate heat by using heat recovered in the recovery circuit, a heat storage circuit in which heat storage fluid circulates and configured to reject the heat generated in the heat source circuit to a heat storage material, and a heat storage tank that houses the heat storage material. The heat storage material includes at least a latent heat storage material or a high-polymer heat storage material.

Preferred embodiments of the invention are defined in the dependent claims.

ADVANTAGEOUS EFFECTS OF THE INVENTION

As described above, in the heat recovery apparatus according to an embodiment of the present invention, a latent heat storage material or a high-polymer heat storage material is used as the heat storage material for storing heat. As a result, the heat storage tank storing the heat storage material can be made smaller, and the entire apparatus thus can be made smaller.

BRIEF DESCRIPTION OF DRAWINGS

FIG 1   is a circuit diagram illustrating an example of the configuration of a heat recovery apparatus according to Embodiment 1.

FIG 2   is a functional block diagram illustrating an example of the configuration of a controller of FIG 1.

FIG 3   is a hardware configuration diagram illustrating an example of the configuration of a controller of FIG 2.

FIG 4   is a hardware configuration diagram illustrating another example of the configuration of the controller of FIG 2.

FIG 5   is a schematic diagram for explaining a heat storage operation and a heat utilization operation of the heat recovery apparatus of FIG 1.

FIG 6   is a schematic diagram for explaining a heat recovery operation of the heat recovery apparatus of FIG 1.

FIG 7   is a flowchart illustrating an example of a flow of heat recovery processing of the heat recovery apparatus according to Embodiment 1.

FIG 8   is a circuit diagram illustrating an example of the configuration of a heat recovery apparatus according to Embodiment 2.

FIG 9   is a flowchart illustrating an example of a flow of heat recovery processing of the heat recovery apparatus according to Embodiment 2.

DESCRIPTION OF EMBODIMENTS

Embodiment 1

A heat recovery apparatus according to a preferred Embodiment 1 will be described below. The heat recovery apparatus according to Embodiment 1 is configured to store heat from a heat source and enable a terminal connected to the heat recovery apparatus to utilize the stored heat.

Configuration of Heat Recovery Apparatus 100

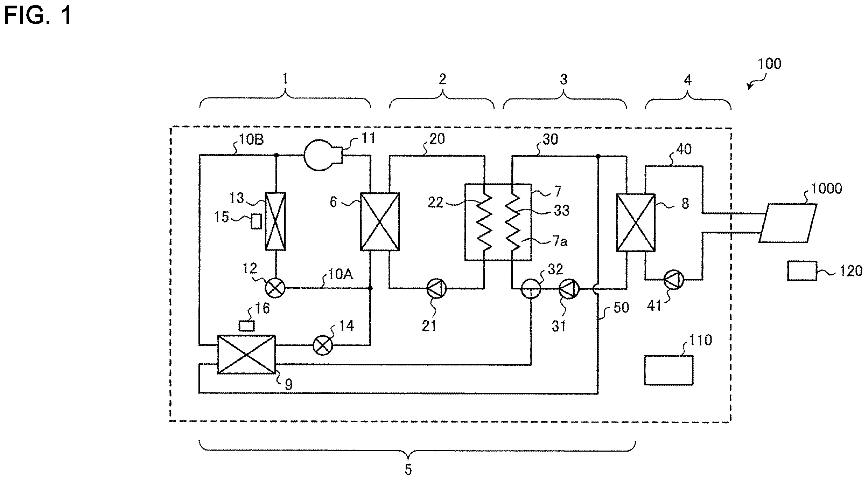

FIG 1 is a circuit diagram illustrating an example of the configuration of a heat recovery apparatus 100 according to Embodiment 1. As shown in FIG 1, the heat recovery apparatus 100 mainly includes a heat source unit 1, a heat storage unit 2, a utilization unit 3, a terminal unit 4, a recovery unit 5, and a controller 110. A terminal 1000 to be used by a user is connected to the heat recovery apparatus 100. The terminal 1000 utilizes heat stored in the heat recovery apparatus 100 to perform heating or other operation. The terminal 1000 is a floor heating panel, for example, but is not limited to a floor heating panel. The terminal 1000 may be a panel heater or a heating radiator, for example. In addition, the terminal 1000 may be a bathtub. In this case, the heat recovery apparatus 100 is used to heat hot water in the bathtub for reheating and to keep the hot water hot.

Heat Source Unit 1

The heat source unit 1 includes a compressor 11, a heat source heat exchanger 6, a first expansion mechanism, hereafter called air expansion mechanism 12, an air heat receiving heat exchanger 13, a second expansion mechanism, hereafter called expansion mechanism 14 for recovery, and a heat receiving heat exchanger 9 for recovery. The heat source unit 1 is provided with an air heat source pipe 10A to which the compressor 11, the heat source heat exchanger 6, the air expansion mechanism 12, and the air heat receiving heat exchanger 13 are connected. An air heat source circuit, through which refrigerant circulates, is formed by sequentially connecting the compressor 11, the heat source heat exchanger 6, the air expansion mechanism 12, and the air heat receiving heat exchanger 13 by the air heat source pipe 10A.

Furthermore, the heat source unit 1 is provided with a recovery heat source pipe 10B, which branches off at a point between a refrigerant outflow side of the heat source heat exchanger 6 and a refrigerant inflow side of the air expansion mechanism 12 and joins at a point between a refrigerant outflow side of the air heat receiving heat exchanger 13 and a suction side of the compressor 11. The expansion mechanism 14 for recovery and the heat receiving heat exchanger 9 for recovery are connected to the recovery heat source pipe 10B. A recovery heat source circuit, through which refrigerant circulates, is formed by sequentially connecting the compressor 11, the heat source heat exchanger 6, the expansion mechanism 14 for recovery, and the heat receiving heat exchanger 9 for recovery by the recovery heat source pipe 10B and a part of the air heat source pipe 10A.

As refrigerant circulating in the air heat source circuit and the recovery heat source circuit, a hydrofluorocarbon (HFC) refrigerant such as R410A and R32, or a natural refrigerant such as carbon dioxide ($CO_2$) and propane can be used, for example. Note that the type of the refrigerant is not limited to the refrigerants, and any other refrigerant may be used.

The compressor 11 is configured to suction refrigerant in a low-temperature and low-pressure state, compress the suctioned refrigerant, and then discharge the refrigerant in a high-temperature and high-pressure state. The compressor 11 is, for example, an inverter compressor in which a capacity, which is a delivery amount per unit time, is controlled by changing an operation frequency. The operation frequency of the compressor 11 is controlled by the controller 110.

The heat source heat exchanger 6 is configured to exchange heat between the refrigerant flowing in the air heat source circuit or the recovery heat source circuit connected to a refrigerant side flow path and heat storage fluid flowing in a heat storage circuit, which will be described later, connected to a liquid side flow path. In the heat source heat exchanger 6, the refrigerant rejects heat to the heat storage fluid.

The air expansion mechanism 12 is configured to expand the refrigerant that has flowed out from the heat source heat exchanger 6, thereby reducing the temperature and the pressure of the refrigerant. The air expansion mechanism 12 is also configured to close the flow path of the refrigerant so that flow of the refrigerant can be blocked. The air expansion mechanism 12 is, for example, a valve capable of controlling its opening degree, such as an electronic expansion valve. The opening degree of the air expansion mechanism 12 is controlled by the controller 110.

The air heat receiving heat exchanger 13 is configured to exchange heat between outdoor air supplied by a fan, which is not shown, and the refrigerant. In the air heat receiving heat exchanger 13, the refrigerant receives heat from the outdoor air, thereby evaporating.

The expansion mechanism 14 for recovery is configured to expand the refrigerant that has flowed out from the heat source heat exchanger 6, thereby reducing the temperature and the pressure of the refrigerant. The expansion mechanism 14 for recovery is also configured to close the flow path of the refrigerant so that flow of the refrigerant can be blocked. The expansion mechanism 14 for recovery is, for example, a valve capable of controlling its opening degree, such as an electronic expansion valve. The opening degree of the expansion mechanism 14 for recovery is controlled by the controller 110.

The heat receiving heat exchanger 9 for recovery is configured to exchange heat between the refrigerant flowing in the recovery heat source circuit connected to a refrigerant side flow path and recovery fluid flowing in a recovery circuit, which will be described later, connected to a liquid side flow path. In the heat receiving heat exchanger 9 for recovery, the refrigerant receives heat from the recovery fluid, thereby evaporating.

Furthermore, the heat source unit 1 is provided with an outdoor air temperature sensor 15 and an evaporation temperature sensor 16. The outdoor air temperature sensor 15 is installed near the air heat receiving heat exchanger 13 and is configured to detect the temperature of outdoor air supplied to the air heat receiving heat exchanger 13. The evaporation temperature sensor 16 is installed near the heat receiving heat exchanger 9 for recovery and is configured to detect the evaporation temperature of the refrigerant at which the refrigerant evaporates.

Heat Storage Unit 2

The heat storage unit 2 includes the heat source heat exchanger 6, a heat storage pump 21, a heat storage tank 7, and a heat storage heat exchanger 22. The heat storage unit 2 is provided with a heat storage pipe 20 to which the heat source heat exchanger 6, the heat storage heat exchanger 22, and the heat storage pump 21 are connected. A heat storage circuit, through which heat storage fluid circulates, is formed by sequentially connecting the heat source heat exchanger 6, the heat storage heat exchanger 22, and the heat storage pump 21 by the heat storage pipe 20. As the heat storage fluid, water or antifreeze can be used, for example.

The heat storage tank 7 is formed into a cuboid shape, for example. Inside the heat storage tank 7, a heat storage material 7a, the heat storage heat exchanger 22, and a utilization heat exchanger 33, which will be described later, are housed. The heat storage material 7a is a material that has a larger heat storage amount per volume than that of water (hot water). The heat storage material 7a is housed in the heat storage tank 7 so as to fill the inside of the heat storage tank 7. The heat storage material 7a includes, for example, a latent heat storage material that stores and releases heat by using latent heat associated with a phase change of the material between a solid state and a liquid state, or a high-polymer heat storage material that stores and releases heat by using reaction heat generated when a high-polymer adsorbs and desorbs water molecules.

Because a latent heat storage material stores heat by using latent heat of the heat storage material, the thermal capacity per volume is larger than that of a case where water is used to store heat (that is a case of sensible heat storage). When the heat storage material 7a includes a latent heat storage material, examples of the latent heat storage material include paraffins, sugar alcohols such as erythritol, and hydrated salts such as sodium acetate trihydrate.

The whole amount of the heat storage material 7a need not be a latent heat storage material, and may be a mixed material of a latent heat storage material and water. Even by using such a mixed material of a latent heat storage material and water, latent heat of the latent heat storage material can be utilized, and the heat storage amount per volume is thus larger than that of a case where only water is used. Furthermore, a high-polymer heat storage material that stores and releases heat by using reaction heat generated when a high-polymer adsorbs and desorbs water molecules may be used as the heat storage material 7a. This is because the reaction heat of such a high-polymer heat storage material is larger than sensible heat storage utilizing only water.

When the heat storage material 7a includes a high-polymer heat storage material, the high-polymer heat storage material has at least a high-polymer and water, and is, for example, a temperature-responsive gel. The high-polymer is a temperature-responsive high-polymer that exhibits hydrophilicity and hydrophobicity depending on a temperature. The temperature is a lower critical solution temperature (LCST) for the water. The high-polymer exhibits hydrophilicity at a temperature below the LCST, and exhibits hydrophobicity at a temperature above the LCST.

Specific examples of the high-polymer are high-density cross-linked products, such as poly(N-ethyl(meth)acrylamide), poly(N-n-propyl(meth)acrylamide), poly(N-isopropyl(meth)acrylamide), poly(N-cyclopropyl(meth)acrylamide), poly(N,N-dimethyl(meth)acrylamide, poly(N-ethyl-N-methyl(meth)acrylamide), poly(N-methyl-N-n-propyl(meth)acrylamide), poly(N-isopropyl-N-methyl(meth)acrylamide), poly(N,N-diethyl(meth)acrylamide), poly(N-(meth)acryloylpyrrolidine), poly(N-(meth)acryloylpiperidine), poly(N-ethoxyethyl(meth)acrylamide), poly(N-ethyl-N-methoxyethyl(meth)acrylamide), poly(N-methoxypropyl(meth)acrylamide), poly(N-ethoxypropyl(meth)acrylamide), poly(N-isopropoxypropyl(meth)acrylamide), poly(N-methoxyethoxypropyl(meth)acrylamide), poly(N-tetrahydrofurfuryl(meth)acrylamide), poly(N-1-methyl-2-methoxyethyl(meth)acrylamide), poly(N-1-methoxymethylpropyl(meth)acrylamide), poly[N-(2,2-dimethoxyethyl)-N-methyl(meth)acrylamide], poly[N-(1,3-dioxolan-2-yl)-N-methyl(meth)acrylamide], poly[N-8-(meth)acryloyl 1,4-dioxa-8-azaspiro(4,5)decane], poly(N,N-dimethoxyethyl(meth)acrylamide), and poly(N-(meth)acryloylmorpholine), and high-density cross-linked products of copolymers formed by copolymerizing two or more of monomers included in the above high-density cross-linked products. These high-density cross-linked products have a dense structure in which polymer chains can contact each other.

The water is preferably pure water but is not limited to pure water. The water may be water that does not contain a component that may degrade the high-polymer. The water is classified into bound water that is bound to a high-density cross-linked product of the high-polymer and free water that excludes the bound water. Because the high-polymer has a hydrophilic swelling structure at a temperature below the LCST, bound water of the water forms a stable high-order molecular sequence to increase the hydrogen bonding strength.

Meanwhile, because the high-polymer has a hydrophobic shrinking structure at a temperature above the LCST, bound water of the water forms an unstable low-order molecular sequence to reduce the hydrogen bonding strength. That is, in the heat storage material 7a, the hydrogen bonding strength of bound water can be enhanced or reduced around the LCST. Because the hydrogen bonding strength of bound water in the heat storage material 7a can be varied around the LCST, the heat storage material 7a has a large heat storage amount corresponding to the variation of the hydrogen bonding strength.

As described above, because the heat storage material 7a including a latent heat storage material or a high-polymer heat storage material has a large heat storage amount, the filling amount of the heat storage material 7a filled in the heat storage tank 7 cab be reduced. Therefore, the heat recovery apparatus 100 can be made smaller.

The heat storage pump 21 is configured to be driven by a motor, which is not shown, and send and supply the heat storage liquid that has flowed out from the heat storage heat exchanger 22 to a liquid side flow path of the heat source heat exchanger 6. The rotation frequency of the heat storage pump 21 is controlled by the controller 110.

The heat storage heat exchanger 22 is configured to exchange heat between the heat storage fluid flowing in the heat storage heat exchanger 22 and the heat storage material 7a filled in the heat storage tank 7. In Embodiment 1, the heat storage fluid rejects heat to the heat storage material 7a in the heat storage heat exchanger 22. The heat storage material 7a is thus heated.

Utilization Unit 3

The utilization unit 3 includes a utilization pump 31, a flow switching device 32, the utilization heat exchanger 33, and a terminal heat exchanger 8. The utilization unit 3 is provided with a utilization pipe 30 to which the utilization pump 31, the flow switching device 32, the utilization heat exchanger 33, and the terminal heat exchanger 8 are connected. A utilization circuit, through which utilization fluid circulates, is formed by sequentially connecting the utilization pump 31, the flow switching device 32, the utilization heat exchanger 33, and the terminal heat exchanger 8 by the utilization pipe 30. As the utilization fluid, water or antifreeze can be used, for example.

The utilization pump 31 is configured to be driven by a motor, which is not shown, and send and supply the utilization fluid that has flowed out from the terminal heat exchanger 8 to the flow switching device 32. The rotation frequency of the utilization pump 31 is controlled by the controller 110.

The flow switching device 32 is, for example, a three-way valve, and is configured to switch flow directions of the fluid by making flow paths in two directions, out of three directions, communicate with each other while blocking a flow path of the remaining one direction. The flow switching device 32 is installed either between the utilization heat exchanger 33 and the utilization pump 31 or between the utilization heat exchanger 33 and the terminal heat exchanger 8.

In the example shown in FIG 1, the flow switching device 32 is installed between the utilization heat exchanger 33 and the utilization pump 31. When heat is supplied to the terminal 1000, the flow switching device 32 is switched as shown by the solid line of FIG 1, so that a discharge side of the utilization pump 31 and the utilization heat exchanger 33 communicate with each other. Switching of the flow paths in the flow switching device 32 is controlled by the controller 110.

The utilization heat exchanger 33 is configured to exchange heat between the utilization fluid flowing in the utilization heat exchanger 33 and the heat storage material 7a filled in the heat storage tank 7. In Embodiment 1, the utilization fluid receives heat from the heat storage material 7a, in which heat is stored, in the utilization heat exchanger 33. The utilization fluid is thus heated.

The terminal heat exchanger 8 is configured to exchange heat between the utilization fluid flowing in the utilization circuit and terminal fluid flowing in a terminal circuit, which will be described later. The utilization fluid rejects heat to the terminal fluid in the terminal heat exchanger 8. The terminal fluid is thus heated.

Terminal Unit 4

The terminal unit 4 includes a terminal pump 41 and the terminal heat exchanger 8. The terminal unit 4 is provided with a terminal pipe 40 to which the terminal pump 41, the terminal heat exchanger 8, and the terminal 1000, which is provided outside the heat recovery apparatus 100, are connected. A terminal circuit, through which the terminal fluid circulates, is formed by sequentially connecting the terminal pump 41, the terminal heat exchanger 8, and the terminal 1000 by the terminal pipe 40. As the terminal fluid, water or antifreeze can be used, for example.

The terminal pump 41 is configured to be driven by a motor, which is not shown, and send and supply the terminal fluid that has flowed out from the terminal 1000 to the terminal heat exchanger 8. The rotation frequency of the terminal pump 41 is controlled by the controller 110.

The terminal heat exchanger 8 is configured to exchange heat between the utilization fluid or recovery fluid, which will be described later, and the terminal fluid flowing in the terminal circuit. When heat is supplied to the terminal 1000, the utilization fluid rejects heat to the terminal fluid in the terminal heat exchanger 8. The terminal fluid is thus heated. In addition, when residual heat of the terminal 1000 is recovered, the recovery fluid receives heat from the terminal fluid in the terminal heat exchanger 8. The recovery fluid is thus heated.

Recovery Unit 5

The recovery unit 5 includes the utilization pump 31, the flow switching device 32, the heat receiving heat exchanger 9 for recovery, and the terminal heat exchanger 8. The recovery unit 5 is provided with a recovery pipe 50 that connects one of the flow paths of the flow switching device 32 and a point between the utilization heat exchanger 33 and the terminal heat exchanger 8. The recovery pipe 50 is provided with the heat receiving heat exchanger 9 for recovery.

The recovery circuit, through which the recovery fluid circulates, is formed by sequentially connecting the utilization pump 31, the flow switching device 32, the heat receiving heat exchanger 9 for recovery, and the terminal heat exchanger 8 by the recovery pipe 50 and a part of the utilization pipe 30. As the recovery fluid, water or antifreeze can be used, for example. Note that when the flow switching device 32 is installed between the utilization heat exchanger 33 and the terminal heat exchanger 8, the recovery pipe 50 is connected to the utilization pipe 30 at a point between the utilization heat exchanger 33 and the utilization pump 31.

When residual heat of the terminal 1000 is recovered, the flow switching device 32 is switched as shown by the broken line of FIG 1, so that a discharge side of the utilization pump 31 and the heat receiving heat exchanger 9 for recovery communicate with each other.

In this case, because the recovery circuit of the recovery unit 5 is formed by branching from the utilization circuit, the recovery fluid and the utilization fluid are the same fluid. Note that, in the description below, the fluid will be referred to as "utilization fluid" when the fluid circulates in the utilization circuit, and will be referred to as "recovery fluid" when the fluid circulates in the recovery circuit.

Controller 110

The controller 110 controls the whole heat recovery apparatus 100. In particular, in Embodiment 1, the controller 110 controls each units of the heat recovery apparatus 100 during heat recovery processing based on an outdoor air temperature detected by the outdoor air temperature sensor 15 and an evaporation temperature of the refrigerant in the heat receiving heat exchanger 9 for recovery detected by the evaporation temperature sensor 16.

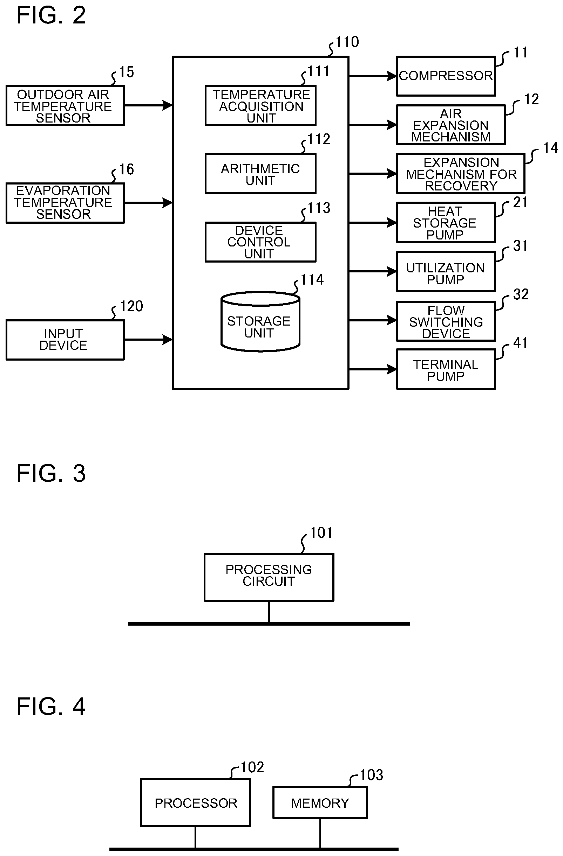

FIG 2 is a functional block diagram illustrating an example of the configuration of the controller 110 of FIG 1. As shown in FIG 2, the controller 110 includes a temperature acquisition unit 111, an arithmetic unit 112, a device control unit 113, and a storage unit 114. The controller 110 achieves various functions by executing software on an arithmetic device, such as a microcomputer, or is made of hardware, such as a circuit device, which achieves various functions.

The temperature acquisition unit 111 is configured to acquire an outdoor air temperature detected by the outdoor air temperature sensor 15 and an evaporation temperature of the refrigerant in the heat receiving heat exchanger 9 for recovery detected by the evaporation temperature sensor 16. The arithmetic unit 112 is configured to perform arithmetic processing based on the outdoor air temperature and the evaporation temperature acquired by the temperature acquisition unit 111.

The device control unit 113 is configured to control the compressor 11, the air expansion mechanism 12, the expansion mechanism 14 for recovery, the heat storage pump 21, the utilization pump 31, the flow switching device 32, and the terminal pump 41 based on the arithmetic result of the arithmetic unit 112. For example, the device control unit 113 controls the opening degrees of the air expansion mechanism 12 and the expansion mechanism 14 for recovery when heat recovery processing is performed by using residual heat of the terminal 1000 or heat of outdoor air.

The storage unit 114 stores, in advance, various values that are used in the units of the controller 110. For example, the storage unit 114 stores, in advance, a set value $\alpha$ that is set for a temperature to be used in arithmetic processing performed in the arithmetic unit 112.

FIG 3 is a hardware configuration diagram illustrating an example of the configuration of the controller 110 of FIG 2. When various functions of the controller 110 are executed by hardware, the controller 110 of FIG 2 is formed as a processing circuit 101 as shown in FIG 3. In the controller 110 of FIG 2, functions of the temperature acquisition unit 111, the arithmetic unit 112, the device control unit 113, and the storage unit 114 are achieved by the processing circuit 101.

When the functions are achieved by hardware, the processing circuit 101 corresponds to, for example, a single circuit, a composite circuit, a programmed processor, a parallel-programmed processor, an application specific integrated circuit (ASIC), a field-programmable gate array (FPGA), or a combination of those circuits. The controller 110 may achieve functions of the temperature acquisition unit 111, the arithmetic unit 112, the device control unit 113, and the storage unit 114 by using respective processing circuits 101 or by using a single processing circuit 101.

FIG 4 is a hardware configuration diagram illustrating another example of the configuration of the controller 110 of FIG 2. When various functions of the controller 110 are achieved by software, the controller 110 of FIG 2 is formed as a processor 102 and a memory 103 as shown in FIG 4. In the controller 110, functions of the temperature acquisition unit 111, the arithmetic unit 112, the device control unit 113, and the storage unit 114 are achieved by the processor 102 and the memory 103.

When the functions are achieved by software, the controller 110 achieves functions of the temperature acquisition unit 111, the arithmetic unit 112, the device control unit 113, and the storage unit 114 by using software, firmware, or a combination of software and firmware. The software or the firmware is described as a program, and is stored in the memory 103. The processor 102 achieves the functions of the above units by reading out and executing the program stored in the memory 103.

As the memory 103, a random access memory (RAM), a read only memory (ROM), a flash memory, an erasable and programmable ROM (EPROM), an electrically erasable and programmable ROM (EEPROM), or other types of non-volatile or volatile semiconductor memory is used, for example. In addition, as the memory 103, a magnetic disc, a flexible disc, an optical disc, a compact disc (CD), a mini disc (MD), a digital versatile disc (DVD), or other types of removable recording medium may be used, for example.

Input device 120

An input device 120 of FIG 1 is operated by a user to input a usage state of the terminal 1000. For example, when the input device 120 is operated by a user, start and end of use of the terminal 1000 and other operations are set. The input device 120 transmits various kinds of set information to the controller 110.

Heat Storage of Heat Storage Tank 7

Next, heat storage of the heat storage tank 7 will be described. As described above, in Embodiment 1, the heat storage material 7a housed in the heat storage tank 7 include a latent heat storage material that stores and releases heat by using latent heat associated with a phase change of the material, or a high-polymer heat storage material that stores and releases heat by using reaction heat generated when a high-polymer adsorbs and desorbs water molecules. The following description is a case where a latent heat storage material is used as the heat storage material 7a.

A latent heat storage material has a large heat storage amount per unit volume as compared with a sensible heat storage material, such as water that stores and releases heat by using sensible heat associated with a temperature change of the material. Therefore, by using a latent heat storage material as the heat storage material 7a, the filling amount of the heat storage material 7a can be reduced as compared to a case where a sensible heat storage material is used to store the same amount of heat. The heat recovery apparatus 100 can thus be made smaller.

As one example of heat storage amount, a case where the heat storage material 7a changes its temperature in a range of 40 °C to 55 °C will be examined. When paraffin having a melting point of 50 °C, for example, is used as the heat storage material 7a including a latent heat storage material, the latent heat of the paraffin per unit volume is about 208 kJ/L. In addition, the sensible heat of the paraffin per unit temperature change and per unit volume is 1.44 kJ/(L·K). Therefore, the heat storage amount of the paraffin per unit volume when the paraffin changes its temperature in a range of 40 °C to 55 °C is calculated by Equation 1.

$$\text{Heat storage amount} = 208 + 1.44 \times (55 - 40) \approx 300 \text{ kJ/L} \qquad \text{...Equation 1}$$

Meanwhile, when water is used as the heat storage material 7a including a sensible heat storage material, for example, the sensible heat of the water per unit temperature change and per unit volume is 4.2 kJ/(L·K). Therefore, the heat storage amount of the water per unit volume when the water changes its temperature in a range of 40 °C to 55 °C is calculated by Equation 2.

$$\text{Heat storage amount} = 4.2 \times (55 - 40) \approx 63 \text{ kJ/L} \qquad \text{...Equation 2}$$

Accordingly, the heat storage amount of the latent heat storage material is about five times larger than that of the sensible heat storage material under the same condition. That is, when the latent heat storage material is used as the heat storage material 7a, the heat storage material 7a can store the same amount of heat with one fifth of the volume of the sensible heat storage material. Therefore, compared with a case where the sensible heat storage material is used as the heat storage material 7a, the heat storage tank 7 can be made smaller, and the heat recovery apparatus 100 can thus be made smaller.

Operation of Heat Recovery Apparatus 100

Next, operation of the heat recovery apparatus 100 will be described. In the heat recovery apparatus 100 according to Embodiment 1, a heat storage operation, a heat utilization operation, and a heat recovery operation are performed. The following describes flows of the refrigerant and the fluids during the heat storage operation, the heat utilization operation, and the heat recovery operation, and heat recovery processing during the heat recovery operation. Each of the operations described below is executed when the input device 120 is operated by a user.

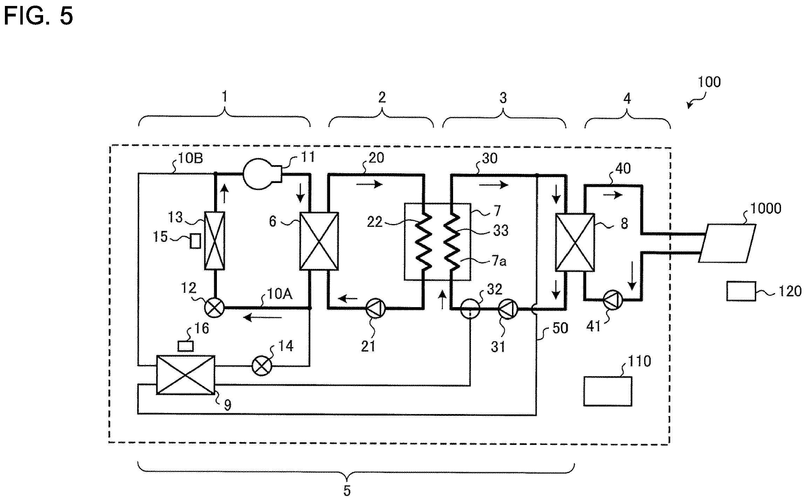

FIG 5 is a schematic diagram for explaining the heat storage operation and the heat utilization operation of the heat recovery apparatus 100 of FIG 1. The heat storage operation is an operation that stores heat received from outdoor air in the heat storage material 7a. The heat utilization operation is an operation that supplies heat stored in the heat storage material 7a to the terminal 1000 from the heat storage material 7a when the terminal 1000 is used.

Heat Storage Operation

The heat storage operation will be described. When the heat storage operation is started, the device control unit 113 "opens" the air expansion mechanism 12 and "closes" the expansion mechanism 14 for recovery in the heat source unit 1 to cause the refrigerant to circulate in the air heat source circuit.

In this case, the refrigerant flowing in the air heat source circuit in a low-temperature and low-pressure state is suctioned into the compressor 11, compressed by the compressor 11, and is then discharged from the compressor 11 in a high-temperature and high-pressure state. The refrigerant in a high-temperature and high-pressure state that has been discharged from the compressor 11 flows into the heat source heat exchanger 6. In the heat source heat exchanger 6, the refrigerant exchanges heat with the heat storage fluid flowing in the heat storage circuit, thereby rejecting heat, and then flows out from the heat source heat exchanger 6.

The refrigerant that has flowed out from the heat source heat exchanger 6 is decompressed by the air expansion mechanism 12, and enters a low-temperature, low-pressure, and two-phase gas-liquid state. The refrigerant in a low-temperature, low-pressure, and two-phase gas-liquid state flows into the air heat receiving heat exchanger 13. In the air heat receiving heat exchanger 13, the refrigerant exchanges heat with outdoor air suctioned by a fan, which is not shown, thereby receiving heat and evaporating, and then is suctioned into the compressor 11. In this manner, in the heat storage operation, by causing the refrigerant to circulate in the air heat source circuit, the heat storage fluid flowing in the heat storage circuit is heated by using the heat received from the outdoor air.

In the heat storage unit 2, the device control unit 113 drives the heat storage pump 21. Thus, the heat storage fluid in the heat storage circuit is discharged from the heat storage pump 21 and flows into the heat source heat exchanger 6. The heat storage fluid that has flowed into the heat source heat exchanger 6 exchanges heat with the refrigerant flowing in the air heat source circuit, and then flows out from the heat source heat exchanger 6.

The heat storage fluid that has flowed out from the heat source heat exchanger 6 flows into the heat storage heat exchanger 22, and exchanges heat with the heat storage material 7a in the heat storage tank 7, thereby rejecting heat. Then, the heat storage fluid that has rejected heat flows out from the heat storage heat exchanger 22. The heat storage fluid that has flowed out from the heat storage heat exchanger 22 is suctioned into the heat storage pump 21, pressurized by the heat storage pump 21, and is then discharged from the heat storage pump 21.

At this time, the heat storage material 7a melts and changes its state from a solid to a liquid when the temperature of the heat storage material 7a increases by receiving heat in the heat storage heat exchanger 22 and reaches its melting point. In this process, the heat storage material 7a stores latent heat of fusion associated with the melting. In this case, the heat storage material 7a can store more heat as compared with a sensible heat storage material. Furthermore, by causing the heat storage fluid to circulate in the heat storage circuit, the heat received from the outdoor air can be stored in the heat storage material 7a.

Heat Utilization Operation

The heat utilization operation will be described. When the heat utilization operation is started, the device control unit 113 drives the utilization pump 31 in the utilization unit 3. The device control unit 113 also switches the flow switching device 32 such that the utilization pump 31 and the utilization heat exchanger 33 communicate with each other. Thus, the utilization fluid in the utilization circuit is discharged from the utilization pump 31 and flows into the utilization heat exchanger 33. The utilization fluid that has flowed into the utilization heat exchanger 33 exchanges heat with the heat storage material 7a, and then flows out from the utilization heat exchanger 33.

The utilization fluid that has flowed out from the utilization heat exchanger 33 flows into the terminal heat exchanger 8, and exchanges heat with the terminal fluid flowing in the terminal circuit, thereby rejecting heat. Then, the utilization fluid that has rejected heat flows out from the terminal heat exchanger 8. The utilization fluid that has flowed out from the terminal heat exchanger 8 is suctioned into the utilization pump 31, pressurized by the utilization pump 31, and is then discharged from the utilization pump 31.

In this manner, by causing the utilization fluid to circulate in the utilization circuit, the heat stored in the heat storage material 7a can be transferred to the outside of the heat storage tank 7.

In the terminal unit 4, the device control unit 113 drives the terminal pump 41. Thus, the terminal fluid in the terminal circuit is discharged from the terminal pump 41, and flows into the terminal heat exchanger 8. The terminal fluid that has flowed into the terminal heat exchanger 8 exchanges heat with the utilization fluid flowing in the utilization circuit, thereby being heated, and then flows out from the terminal heat exchanger 8.

The terminal fluid that has flowed out from the terminal heat exchanger 8 is supplied to the terminal 1000. After heat of the terminal fluid is used, the terminal fluid flows out from the terminal 1000. The terminal fluid that has flowed out from the terminal 1000 is suctioned into the terminal pump 41, pressurized by the terminal pump 41, and is then discharged from the terminal pump 41.

In this manner, by causing the terminal fluid to circulate in the terminal circuit, the heat transferred from the heat storage material 7a can be used at the terminal 1000.

A more specific example will be given for explaining the heat utilization operation. Here, a case where a floor heating panel is used as the terminal 1000 is explained. When a user uses the terminal 1000, the flow switching device 32 of the utilization unit 3 is switched such that the utilization pump 31 and the utilization heat exchanger 33 communicate with each other. In addition, the utilization pump 31 and the terminal pump 41 are in a driven state.

When the melting point of the heat storage material 7a is 50 °C, for example, the heat storage material 7a of the heat storage tank 7 rejects stored latent heat while solidifying at 50 °C, which is the melting point. The utilization fluid receives the heat from the heat storage material 7a at the utilization heat exchanger 33. The utilization fluid whose temperature has reached a temperature of 47 °C, for example, flows out from the utilization heat exchanger 33, and flows into the terminal heat exchanger 8.

Meanwhile, the terminal fluid rejects heat in the terminal 1000. The terminal fluid whose temperature has reached a temperature of 30 °C, for example, flows into the terminal heat exchanger 8. Then, in the terminal heat exchanger 8, the utilization fluid having a temperature of 47 °C and the terminal fluid having a temperature of 30 °C exchange heat with each other.

In this process, the terminal fluid receives heat from the utilization fluid. The terminal fluid whose temperature has reached a temperature of 45 °C, for example, flows out from the terminal heat exchanger 8. The utilization fluid rejects heat to the terminal fluid. The utilization fluid whose temperature has reached a temperature of 33 °C, for example, flows out from the terminal heat exchanger 8.

The terminal fluid having a temperature of 45 °C that has flowed out from the terminal heat exchanger 8 flows into the terminal 1000. In general, it is preferable that the temperature of fluid to be supplied to a floor heating panel be about 45 °C. For this reason, when heat exchange is performed between the fluids as described above, the melting point of the heat storage material 7a is preferably about 50 °C. Note that, after rejecting heat in the terminal 1000, the terminal fluid whose temperature has reached a temperature of 30 °C, for example, flows out from the terminal 1000, and then flows into the utilization heat exchanger 33. Furthermore, floor heating is used mainly during winter season, and the temperature of outdoor air in that period is about 7 °C, for example.

Heat Recovery Operation

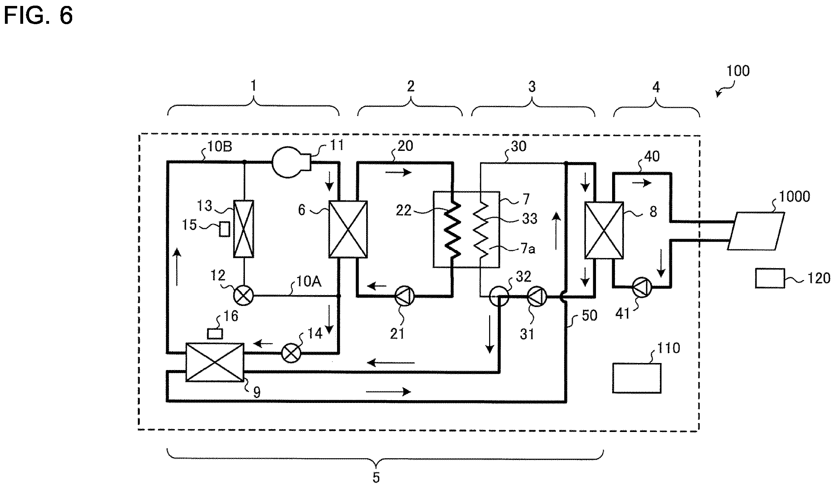

FIG 6 is a schematic diagram for explaining a heat recovery operation of the heat recovery apparatus 100 of FIG 1. The heat recovery operation is an operation that recovers residual heat of the terminal 1000 when use of the terminal 1000 is stopped. When use of the terminal 1000 is stopped, the device control unit 113 drives the terminal pump 41 in the terminal unit 4. Thus, the terminal fluid in the terminal circuit that has residual heat through use of the terminal 1000 is discharged from the terminal pump 41 and flows into the terminal heat exchanger 8. The terminal fluid that has flowed into the terminal heat exchanger 8 exchanges heat with the recovery fluid flowing in the recovery circuit, thereby rejecting heat, and then flows out from the terminal heat exchanger 8.

The terminal fluid that has flowed out from the terminal heat exchanger 8 is supplied to the terminal 1000. After receiving the residual heat of the terminal 1000, the terminal fluid flows out from the terminal 1000. The terminal fluid that has flowed out from the terminal 1000 is suctioned into the terminal pump 41, pressurized by the terminal pump 41, and is then discharged from the terminal pump 41.

The device control unit 113 drives the utilization pump 31 in the utilization unit 3 and the recovery unit 5. The device control unit 113 also switches the flow switching device 32 such that the utilization pump 31 and the heat receiving heat exchanger 9 for recovery communicate with each other. Thus, the recovery fluid in the recovery circuit is discharged from the utilization pump 31, and flows into the heat receiving heat exchanger 9 for recovery. The recovery fluid that has flowed into the heat receiving heat exchanger 9 for recovery exchanges heat with the refrigerant flowing in the recovery heat source circuit, thereby rejecting heat, and flows out from the heat receiving heat exchanger 9 for recovery.

The recovery fluid that has flowed out from the heat receiving heat exchanger 9 for recovery flows into the terminal heat exchanger 8. In the terminal heat exchanger 8, the recovery fluid exchanges heat with the terminal fluid flowing in the terminal circuit, thereby being heated by the residual heat that the terminal fluid has. The heated recovery fluid then flows out from the terminal heat exchanger 8. The recovery fluid that has flowed out from the terminal heat exchanger 8 is suctioned into the utilization pump 31, pressurized by the utilization pump 31, and is then discharged from the utilization pump 31.

The device control unit 113 "closes" the air expansion mechanism 12 and "opens" the expansion mechanism 14 for recovery in the heat source unit 1 to cause the refrigerant to circulate in the recovery heat source circuit. The refrigerant in a low-temperature and low-pressure state flowing in the recovery heat source circuit is suctioned into the compressor 11, compressed by the compressor 11, and is then discharged from the compressor 11 in a high-temperature and high-pressure state. The refrigerant in a high-temperature and high-pressure state that has been discharged from the compressor 11 flows into the heat source heat exchanger 6, exchanges heat with the heat storage fluid flowing in the heat storage circuit, and then flows out from the heat source heat exchanger 6.

The refrigerant that has flowed out from the heat source heat exchanger 6 is decompressed by the expansion mechanism 14 for recovery, thereby entering a low-temperature, low-pressure, and two-phase gas-liquid state. The refrigerant in a low-temperature, low-pressure, and two-phase gas-liquid state flows into the heat receiving heat exchanger 9 for recovery, exchanges heat with the recovery fluid flowing in the recovery circuit, thereby receiving heat and evaporating, and then is suctioned into the compressor 11. In this manner, in the heat recovery operation, by causing the refrigerant to circulate in the recovery heat source circuit, the heat storage fluid is heated by using the heat received from the recovery fluid.

The device control unit 113 drives the heat storage pump 21 in the heat storage unit 2. Thus, the heat storage fluid in the heat storage circuit is discharged from the heat storage pump 21, and flows into the heat source heat exchanger 6. The heat storage fluid that has flowed into the heat source heat exchanger 6 exchanges heat with the refrigerant flowing in the recovery heat source circuit, thereby being heated, and then flows out from the heat source heat exchanger 6.

The heat storage fluid that has flowed out form the heat source heat exchanger 6 flows into the heat storage heat exchanger 22, and exchanges heat with the heat storage material 7a of the heat storage tank 7, thereby rejecting heat. Then, the heat storage fluid that has rejected heat flows out from the heat storage heat exchanger 22. Thus, heat of the heat storage fluid is stored in the heat storage material 7a. The heat storage fluid that has flowed out from the heat storage heat exchanger 22 is suctioned into the heat storage pump 21, pressurized by the heat storage pump 21, and is then discharged from the heat storage pump 21.

In this manner, by causing the heat storage fluid to circulate in the heat storage circuit, the heat received from the recovery fluid can be stored in the heat storage material 7a.

A more specific example will be given for explaining the heat recovery operation. Here, a case where a floor heating panel is used as the terminal 1000 is explained. When a user uses the terminal 1000, the flow switching device 32 of the utilization unit 3 is switched such that the utilization pump 31 and the utilization heat exchanger 33 communicate with each other. In addition, the utilization pump 31 and the terminal pump 41 are in a driven state. When use of the terminal 1000 is ended because the user is leaving the room where the floor heating is used or for other reasons, the user operates the input device 120 such that an end instruction indicating an end of the use of the terminal 1000 is transmitted to the controller 110 from the input device 120. When the controller 110 receives the instruction, the device control unit 113 stops the utilization pump 31 and the terminal pump 41. Accordingly, the use of the terminal 1000 is ended.

At this time, heat corresponding to a temperature of about 30 °C to 45 °C remains in the terminal 1000. Note that for easy understanding, a case where heat corresponding to a temperature of 35 °C remains in the terminal 1000 will be explained below.

When the use of the terminal 1000 is ended, the device control unit 113 switches the flow switching device 32 such that the utilization pump 31 and the heat receiving heat exchanger 9 for recovery communicate with each other. The device control unit 113 also drives the utilization pump 31 and the terminal pump 41. Thus, the terminal fluid having a temperature of 35 °C circulates in the terminal circuit.

Meanwhile, because the recovery fluid in the recovery circuit has rejected heat in the recovery pipe 50 during use of the terminal 1000, the temperature of the recovery fluid is dropped to a temperature near an outdoor temperature. For example, when an outdoor temperature is 7 °C, the temperature of the recovery fluid is about 10 °C. The recovery fluid flows into the terminal heat exchanger 8 and exchanges heat with the terminal fluid, thereby receiving heat from the terminal fluid. Then, the recovery fluid having a temperature of 30 °C, for example, flows out from the terminal heat exchanger 8 and flows into the heat receiving heat exchanger 9 for recovery. Thus, the residual heat of the terminal 1000 is transferred to the heat receiving heat exchanger 9 for recovery.

Next, the device control unit 113 "opens" the expansion mechanism 14 for recovery and "closes" the air expansion mechanism 12 when the air expansion mechanism 12 is in an open state, and drives the compressor 11. Thus, the refrigerant in the heat source unit 1 circulates in the recovery heat source circuit. In the recovery heat source circuit, the refrigerant exchanges heat with the recovery fluid in the heat receiving heat exchanger 9 for recovery, thereby receiving heat from the recovery fluid and evaporating, and is then suctioned into the compressor 11. The device control unit 113 also drives the heat storage pump 21. Thus, the heat storage fluid circulates in the heat storage circuit.

In the heat storage circuit, the heat storage fluid exchanges heat with the refrigerant in the heat source heat exchanger 6, thereby receiving heat from the refrigerant, and then flows into the heat storage heat exchanger 22. The heat storage fluid that has flowed into the heat storage heat exchanger 22 exchanges heat with the heat storage material 7a, thereby heating the heat storage material 7a, and then flows out from the heat storage heat exchanger 22. Thus, the residual heat of the terminal 1000 is recovered and stored in the heat storage tank 7, which houses the heat storage material 7a.

Here, a heat storage efficiency in recovering and storing residual heat of the terminal 1000 will be described. For example, after heat of the recovery fluid is removed by the refrigerant, the recovery fluid whose temperature has reached a temperature of 20 °C flows out from the heat receiving heat exchanger 9 for recovery and flows into the terminal heat exchanger 8.

In general, when heat exchange is performed between refrigerant and liquid, it is preferable that an evaporation temperature of the refrigerant be lower than the temperature of the liquid by about 2 °C. For this reason, when the recovery fluid has a temperature of 20 °C to 30 °C in the heat receiving heat exchanger 9 for recovery, the evaporation temperature of the refrigerant is about 18 °C. Meanwhile, in general, when heat exchange is performed between refrigerant and air, it is preferable that an evaporation temperature of the refrigerant be lower than the temperature of the air by about 5 °C. For this reason, when the temperature of outdoor air is 7 °C, the evaporation temperature is preferably 2 °C.

Therefore, when the recovery fluid is used as a heat source, the evaporation temperature of the refrigerant is higher than that of a case where outdoor air having a temperature of 7 °C is used as a heat source. In addition, a power consumption of the compressor 11 generally becomes smaller as the evaporation temperature of refrigerant becomes higher, and the efficiency is thus improved. Thus, when the recovery fluid is used as a heat source, heat can be stored in the heat storage material 7a more efficiently as compared with a case where outdoor air is used as a heat source.

As recovery of heat progresses, the temperature of the terminal fluid is lowered as the temperature of the residual heat of the terminal 1000 is lowered. Accordingly, the temperature of the recovery fluid is lowered. As a result, the evaporation temperature of the refrigerant in the heat receiving heat exchanger 9 for recovery is lowered as recovery of heat progresses. Meanwhile, because it is preferable that a temperature difference between the recovery fluid and the refrigerant in the heat receiving heat exchanger 9 for recovery be about 2 °C, when the temperature of the recovery fluid flowing out from the heat receiving heat exchanger 9 for recovery is lowered to 4 °C, for example, the evaporation temperature of the refrigerant is 2 °C.

When the recovery of heat from the residual heat of the terminal 1000 is continued, the evaporation temperature is further lowered, and thus the heat storage efficiency is degraded. At this time, when heat is received from outdoor air having a temperature of 7 °C, for example, the evaporation temperature can be kept at 2 °C, and thus lowering of the evaporation temperature can be avoided. This is because outdoor air has an enormous heat capacity and the temperature of outdoor air is not lowered even when heat is removed from the outdoor air. Therefore, the evaporation temperature is not lowered.

That is, when the evaporation temperature of the refrigerant is lowered as the temperature of the recovery fluid is lowered, the evaporation temperature of the refrigerant can be kept higher in a case where heat is received from the recovery fluid, as compared with a case where heat is received from outdoor air, while the evaporation temperature is greater than a value obtained by subtracting the set value $\alpha$ from the outdoor air temperature (evaporation temperature > outdoor air temperature - $\alpha$, where the set value $\alpha$ is 5 °C, for example). Accordingly, the efficiency is improved. In contrast, the evaporation temperature of the refrigerant can be kept higher in a case where heat is received from outdoor air, as compared with a case where heat is received from the recovery fluid, while the evaporation temperature is less than or equal to a value obtained by subtracting the set value $\alpha$ from the outdoor air temperature (evaporation temperature $\leq$ outdoor air temperature - $\alpha$). Accordingly, the efficiency is improved.

That is, the temperature acquisition unit 111 acquires the evaporation temperature of the refrigerant and the temperature of outdoor air. When evaporation temperature > outdoor air temperature - $\alpha$ is determined by the arithmetic unit 112, acquisition of the evaporation temperature of the refrigerant and the temperature of outdoor air is continued while recovery of heat from the terminal fluid is continued. When evaporation temperature $\leq$ outdoor air temperature - $\alpha$ is determined, the device control unit 113 "opens" the air expansion mechanism 12 and "closes" the expansion mechanism 14 for recovery. As a result, the recovery heat source circuit is blocked, and the refrigerant is caused to circulate in the air heat source circuit, instead of the recovery heat source circuit. In this case, the refrigerant circulating in the air heat source circuit receives heat from the outdoor air having a temperature of 7 °C.

As described above, by opening and closing the air expansion mechanism 12 and the expansion mechanism 14 for recovery by the device control unit 113 so as to cause the refrigerant to receive heat from outdoor air, a decrease in the evaporation temperature can be prevented and thus degradation in the efficiency can be prevented.

Note that, when the heat recovery apparatus 100 is installed, the heat recovery apparatus 100 is connected to the terminal 1000. At the time of connection, foreign substances such as dust associated with the connection operation may enter the terminal circuit. However, because the recovery pipe 50 of the recovery circuit, which recovers the residual heat of the terminal 1000, is not connected to the terminal pipe 40 of the terminal circuit, foreign substances in the terminal circuit never enters the recovery circuit and thus never blocks the recovery circuit.

Because the terminal circuit and the recovery circuit are provided separately in the heat recovery apparatus 100 and the recovery fluid in the recovery pipe 50 can flow appropriately, the residual heat of the terminal 1000 can be transferred to the recovery heat source circuit in a reliable manner.

Heat Recovery Processing

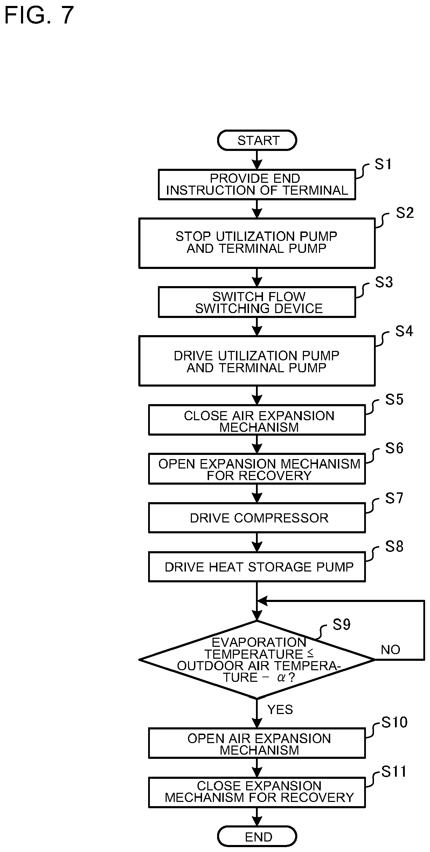

FIG 7 is a flowchart illustrating an example of a flow of heat recovery processing of the heat recovery apparatus 100 according to Embodiment 1. In step S1, when an end instruction indicating an end of use of the terminal 1000 is transmitted from the input device 120, the device control unit 113 of the controller 110 stops driving of the utilization pump 31 and the terminal pump 41 in step S2. In step S3, the device control unit 113 switches the flow switching device 32 such that the utilization pump 31 and the heat receiving heat exchanger 9 for recovery communicate with each other.

In step S4, the device control unit 113 drives the utilization pump 31 and the terminal pump 41. Thus, the terminal fluid circulates in the terminal circuit and the recovery fluid circulates in the recovery circuit. Then, the device control unit 113 "closes" the air expansion mechanism 12 in step S5 when the air expansion mechanism 12 is in an open state, and "opens" the expansion mechanism 14 for recovery in step S6. Then, the device control unit 113 drives the compressor 11 in step S7, and drives the heat storage pump 21 in step S8. Thus, the refrigerant circulates in the recovery heat source circuit and the heat storage fluid circulates in the heat storage circuit. Then, the heat recovery operation for recovering the residual heat of the terminal 1000 is started.

Next, in step S9, the arithmetic unit 112 determines whether or not "evaporation temperature $\leq$ outdoor air temperature - $\alpha$" is satisfied based on the outdoor air temperature detected by the outdoor air temperature sensor 15 and the evaporation temperature of the refrigerant in the heat receiving heat exchanger 9 for recovery detected by the evaporation temperature sensor 16.

When the determination result indicates that "evaporation temperature $\leq$ outdoor air temperature - $\alpha$" is satisfied

(YES in step S9), the process proceeds to step S10. Meanwhile, when "evaporation temperature > outdoor air temperature - α" is satisfied (NO in step S9), the process of step S9 is repeated until the condition of "evaporation temperature ≤ outdoor air temperature - α" is obtained.

In step S10, the device control unit 113 "opens" the air expansion mechanism 12. In step S11, the device control unit 113 "closes" the expansion mechanism 14 for recovery. Thus, the refrigerant circulates in the air heat source circuit and the heat recovery operation is performed by using heat of outdoor air. Note that, in the above description, the heat recovery processing is performed to recover the residual heat of the terminal 1000. However, residual heat to be recovered includes residual heat in the terminal pipe 40.

As described above, in the heat recovery apparatus 100 according to Embodiment 1, at least a latent heat storage material or a high-polymer heat storage material is used as the heat storage material 7a, which is filled in the heat storage tank 7 and stores heat. Thus, because the heat storage material 7a can store the same amount of heat with less filling amount, as compared with some heat storage material such as a sensible heat storage material, the heat storage tank 7 that houses the heat storage material 7a can be made smaller, and the entire heat recovery apparatus 100 can thus be made smaller.

Furthermore, the heat recovery apparatus 100 includes the utilization circuit, in which the utilization heat exchanger 33, the terminal heat exchanger 8, and the utilization pump 31 are connected by the utilization pipe 30 and the utilization fluid circulates, and the recovery circuit, which includes a part of the utilization pipe 30 and the recovery pipe 50 connecting between a point between the utilization heat exchanger 33 and the utilization pump 31 and a point between the utilization heat exchanger 33 and the terminal heat exchanger 8, and in which the recovery fluid circulates. With this configuration, because a part of the utilization circuit is used as the recovery circuit, the circuit configuration can be simplified and the entire heat recovery apparatus 100 can be made smaller.

In the heat recovery apparatus 100, the flow switching device 32 is further provided either at a point between the utilization heat exchanger 33 and the utilization pump 31 or a point between the utilization heat exchanger 33 and the terminal heat exchanger 8. The flow switching device 32 switches flow paths such that the utilization pump 31 and the utilization heat exchanger 33 communicate with each other when the utilization fluid is caused to flow in the utilization circuit, and such that the utilization pump 31 and the heat receiving heat exchanger 9 for recovery communicate with each other when the recovery fluid is caused to flow in the recovery circuit. The utilization fluid and the recovery fluid is the same fluid. With this configuration, because a part of the utilization circuit is used as the recovery circuit, the entire heat recovery apparatus 100 can be made smaller.

In the heat recovery apparatus 100, the flow switching device 32 switches flow paths such that the utilization pump 31 and the heat receiving heat exchanger 9 for recovery communicate with each other when use of the terminal 1000 is ended. Thus, the residual heat of the terminal 1000 is transferred to the heat receiving heat exchanger 9 for recovery via the recovery circuit, and the residual heat can thus be recovered through the recovery heat source circuit.

In the heat recovery apparatus 100, the terminal circuit is provided with the terminal pipe 40 connecting the terminal pump 41, the terminal heat exchanger 8, and the terminal 1000, which is provided outside the heat recovery apparatus 100. Because the recovery pipe 50 of the recovery circuit, which recovers the residual heat of the terminal 1000, is not connected to the terminal pipe 40 of the terminal circuit, foreign substances in the terminal circuit never enters the recovery circuit and thus never blocks the recovery circuit. Therefore, in the heat recovery apparatus 100, because the recovery fluid in the recovery pipe 50 can flow appropriately, the residual heat of the terminal 1000 can be transferred to the recovery heat source circuit in a reliable manner.

In the heat recovery apparatus 100, the heat receiving heat exchanger 9 for recovery causes the recovery fluid to reject heat to the refrigerant that has flowed out from the expansion mechanism 14 for recovery. Therefore, the heat storage fluid can be heated by using the heat received from the recovery fluid, and thus the recovered heat can be stored appropriately.

In the heat recovery apparatus 100, the air heat source circuit further includes the air expansion mechanism 12, which is configured to expand the refrigerant that has flowed out from the heat source heat exchanger 6, and the air heat receiving heat exchanger 13, which is configured to exchange heat between the refrigerant that has flowed out from the air expansion mechanism 12 and outdoor air and cause the refrigerant to receive heat from the outdoor air. Therefore, heat can be received also from outdoor air, and thus the efficiency of heat storage can be improved.

In the heat recovery apparatus 100, when use of the terminal 1000 is ended, the expansion mechanism 14 for recovery is opened, and, when the air expansion mechanism 12 is in an open state, the air expansion mechanism 12 is closed. Furthermore, when the evaporation temperature of the refrigerant detected by the evaporation temperature sensor 16 is lower than a value that is obtained by subtracting the set temperature α from the outdoor air temperature detected by the outdoor air temperature sensor 15, the heat recovery apparatus 100 closes the expansion mechanism 14 for recovery and opens the air expansion mechanism 12. Therefore, lowering of the evaporation temperature can be avoided, and thus the efficiency of heat storage can be improved.

Embodiment 2

A preferred embodiment 2 of the present invention will be described below. Embodiment 2 differs from preferred Embodiment 1 in that a hot water supply unit and a hot wastewater unit are provided. Note that, in Embodiment 2, components that are the same as those of Embodiment 1 will be denoted by the same reference signs, and their descriptions will be omitted.

Configuration of Heat Recovery Apparatus 200

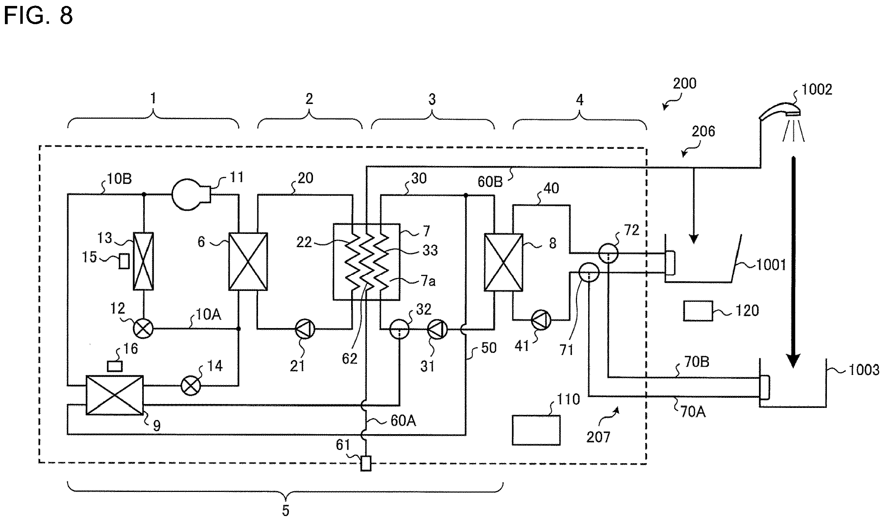

FIG 8 is a circuit diagram illustrating an example of the configuration of a heat recovery apparatus 200 according to Embodiment 2.

As shown in FIG 8, the heat recovery apparatus 200 mainly includes a heat source unit 1, a heat storage unit 2, a utilization unit 3, a terminal unit 4, a recovery unit 5, a hot water supply unit 206, a hot wastewater unit 207, and a controller 110. A terminal 1001 to be used by a user, a hot water supply terminal 1002 to be used by a user, and a hot wastewater tank 1003 are connected to the heat recovery apparatus 200.

The terminal 1001 is a bathtub, for example. In this case, the heat recovery apparatus 200 is used to heat the hot water in the bathtub for reheating and to keep the hot water hot. Note that the terminal 1001 is not limited to a bathtub, and may be, for example, the floor heating panel described in Embodiment 1.

The hot water supply terminal 1002 is, for example, a shower, and hot water is supplied to the hot water supply terminal 1002 from the heat recovery apparatus 200. Note that the hot water supply terminal 1002 is not limited to a shower, and may be one of various terminals that supply hot water for, for example, washing faces, washing hands, washing dishes, and other purposes.

The hot wastewater tank 1003 is a hot water storage tank that stores hot water used by a user through the hot water supply terminal 1002. That is, the hot wastewater tank 1003 stores fluid having residual heat after use. The hot wastewater tank 1003 may be connected to the terminal 1001 such that the hot water of the terminal 1001, which is a bathtub, enters the hot wastewater tank 1003.

Hot Water Supply Unit 206

The hot water supply unit 206 includes a water supply end 61 and a hot water supply heat exchanger 62. The hot water supply unit 206 is provided with a water supply pipe 60A connecting the water supply end 61 and the hot water supply heat exchanger 62, and a hot water supply pipe 60B connecting the hot water supply heat exchanger 62 and the hot water supply terminal 1002. The water supply end 61 and the hot water supply heat exchanger 62 are connected by the water supply pipe 60A and the hot water supply pipe 60B to form a hot water supply circuit.

A water pipe, a well water pipe, a clean water pipe, or a city water pipe is connected to the water supply end 61, and tap water or other water is supplied to the water supply end 61. The hot water supply heat exchanger 62 is housed in the heat storage tank 7. In the hot water supply heat exchanger 62, heat exchange is performed between the tap water supplied via the water supply end 61 and the heat storage material 7a filled in the heat storage tank 7. In the hot water supply heat exchanger 62 of Embodiment 2, by rejecting heat stored in the heat storage material 7a to the tap water, the tap water is heated and thus becomes hot water. The generated hot water flows out from the hot water supply heat exchanger 62 and is supplied to the hot water supply terminal 1002 via the hot water supply pipe 60B.

Hot Wastewater Unit 207

The hot wastewater unit 207 includes a first hot wastewater flow switching device 71, a second hot wastewater flow switching device 72, a terminal pump 41, and a terminal heat exchanger 8. A hot wastewater circuit, through which hot wastewater circulates, is formed by sequentially connecting the first hot wastewater flow switching device 71, the terminal pump 41, the terminal heat exchanger 8, the second hot wastewater flow switching device 72, and the hot wastewater tank 1003 by a part of the terminal pipe 40, a first hot wastewater pipe 70A, and a second hot wastewater pipe 70B.

One end of the first hot wastewater pipe 70A is connected to the hot wastewater tank 1003, and the other end of the first hot wastewater pipe 70A is connected to the first hot wastewater flow switching device 71. One end of the second hot wastewater pipe 70B is connected to the hot wastewater tank 1003, and the other end of the second hot wastewater pipe 70B is connected to the second hot wastewater flow switching device 72.

The first hot wastewater flow switching device 71 is, for example, a three-way valve, and is configured to switch flow directions of fluid by making flow paths in two directions, out of three directions, communicate with each other while blocking a flow path of the remaining one direction. The first hot wastewater flow switching device 71 is installed on the terminal circuit between the terminal 1001 and the terminal pump 41. When residual heat of the hot wastewater tank 1003 is recovered, the first hot wastewater flow switching device 71 is switched as shown by the broken line of FIG 8, so that the hot wastewater tank 1003 and the terminal pump 41 communicate with each other. Switching of the flow paths in the first hot wastewater flow switching device 71 is controlled by the controller 110.

The second hot wastewater flow switching device 72 is, for example, a three-way valve, and is configured to switch flow directions of fluid by making flow paths in two directions, out of three directions, communicate with each other while blocking a flow path of the remaining one direction. The second hot wastewater flow switching device 72 is installed on the terminal circuit between the terminal 1001 and the terminal heat exchanger 8.

When residual heat of the hot wastewater tank 1003 is recovered, the second hot wastewater flow switching device 72 is switched as shown by the broken line of FIG 8, so that the hot wastewater tank 1003 and the terminal heat exchanger 8 communicate with each other. Switching of the flow paths in the second hot wastewater flow switching device 72 is controlled by the controller 110.

Controller 110

The controller 110 has the same configuration as that of Embodiment 1. However, in Embodiment 2, the controller 110 controls the first hot wastewater flow switching device 71 and the second hot wastewater flow switching device 72, in addition to the compressor 11, the air expansion mechanism 12, the expansion mechanism 14 for recovery, the heat storage pump 21, the utilization pump 31, the flow switching device 32, and the terminal pump 41.

Operation of Heat Recovery Apparatus 200

Next, operation of the heat recovery apparatus 200 will be described. In the heat recovery apparatus 200 according to Embodiment 2, a heat storage operation, a heat utilization operation, and a heat recovery operation are performed, as with Embodiment 1. In the heat recovery operation in Embodiment 2, residual heat of the hot wastewater tank 1003 as well as residual heat of the terminal 1001 are recovered.

Heat Utilization Operation and Heat Recovery Operation

Operations of each unit and flows of the fluids during the heat utilization operation and the heat recovery operation are the same as those of Embodiment 1. The heat utilization operation will be explained below by using a specific example. Here, a case where the terminal 1001 is a bathtub is explained. When a user uses the terminal 1001, the flow switching device 32 of the utilization unit 3 is switched such that the utilization pump 31 and the utilization heat exchanger 33 communicate with each other. In addition, the utilization pump 31 and the terminal pump 41 are in a driven state. Furthermore, the first hot wastewater flow switching device 71 is switched such that the terminal 1001 and the terminal pump 41 communicate with each other. The second hot wastewater flow switching device 72 is switched such that the terminal 1001 and the terminal heat exchanger 8 communicate with each other.

When the melting point of the heat storage material 7a is 50 °C, for example, the heat storage material 7a of the heat storage tank 7 rejects stored latent heat while solidifying at 50 °C, which is the melting point. The utilization fluid receives heat from the heat storage material 7a at the utilization heat exchanger 33. The utilization fluid whose temperature has reached a temperature of 47 °C, for example, flows out from the utilization heat exchanger 33 and flows into the terminal heat exchanger 8.

Meanwhile, the terminal fluid is mixed with the hot water of the terminal 1001 in the terminal 1001 and the temperature of the terminal fluid is reduced. The terminal fluid whose temperature has reached a temperature of 40 °C, for example, flows into the terminal heat exchanger 8. Then, in the terminal heat exchanger 8, the utilization fluid having a temperature of 47 °C and the terminal fluid having a temperature of 40 °C exchange heat with each other.

In this process, the terminal fluid receives heat from the utilization fluid. The terminal fluid whose temperature has reached a temperature of 45 °C, for example, flows out from the terminal heat exchanger 8. Meanwhile, the utilization fluid rejects heat to the terminal fluid. The utilization fluid whose temperature has reached a temperature of 42 °C, for example, flows out from the terminal heat exchanger 8.

The terminal fluid having a temperature of 45 °C that has flowed out from the terminal heat exchanger 8 flows into the terminal 1001. In general, when a user takes a bath, the temperature of hot water is about 40 °C to 45 °C. For this reason, when heat exchange is performed between the fluids as described above, the melting point of the heat storage material 7a is preferably about 50 °C. At this time, the temperature of outdoor air is about 7 °C, for example.

In the hot water supply unit 206, tap water that has flowed into the hot water supply heat exchanger 62 via the water supply pipe 60A exchanges heat with the heat storage material 7a, thereby being heated, and flows out from the hot water supply heat exchanger 62 as hot water. The hot water that has flowed out from the hot water supply heat exchanger 62 is supplied to the hot water supply terminal 1002 via the hot water supply pipe 60B and is used by the user.

When the melting point of the heat storage material 7a is 50 °C, for example, the heat storage material 7a of the heat storage tank 7 rejects stored latent heat while solidifying at 50 °C, which is the melting point. The tap water receives heat from the heat storage material 7a at the hot water supply heat exchanger 62. The tap water whose temperature has reached a temperature of 45 °C, for example, flows out from the hot water supply heat exchanger 62 and is supplied to the hot water supply terminal 1002 via the hot water supply pipe 60B.

In general, when the user takes a shower, the temperature of the hot water is about 40 °C to 45 °C. For this reason, when hot water having an appropriate temperature for shower is supplied to the terminal 1001, the melting point of the heat storage material 7a is preferably about 50 °C.

Heat Recovery Operation

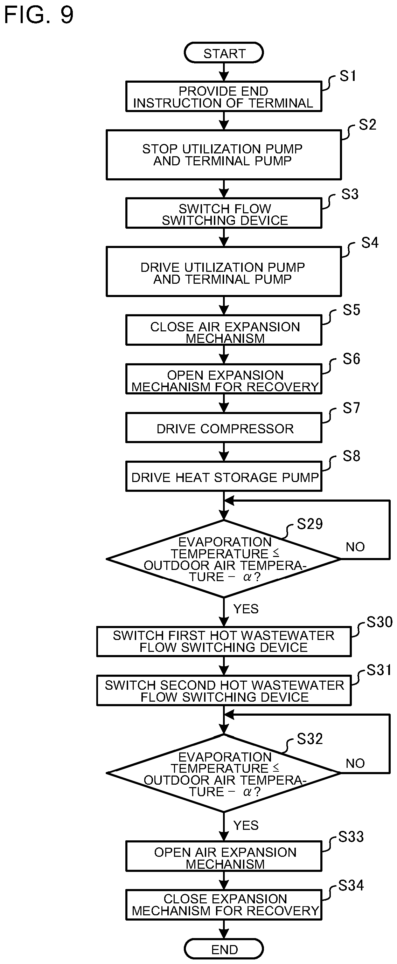

FIG 9 is a flowchart illustrating an example of a flow of heat recovery processing of the heat recovery apparatus 200 according to Embodiment 2. The heat recovery operation will be explained with reference to the flowchart of FIG. 9 by using a more specific example. Here, a case where a bathtub is used as the terminal 1001 will be explained.

When use of the terminal 1001 is ended because the user finishes taking a bath or for other reasons, the user operates the input device 120 such that an end instruction indicating an end of use of the terminal 1001 is transmitted to the controller 110 from the input device 120 in step S1. When receiving the instruction, the controller 110 stops the utilization pump 31 and the terminal pump 41 in step S2. Accordingly, the use of the terminal 1001 is ended.

At this time, heat corresponding to a temperature of about 40 °C to 45 °C remains in the terminal 1001. Note that for easy understanding, a case where heat corresponding to a temperature of 42 °C remains in the terminal 1001 will be explained below.

Furthermore, when the use of the terminal 1001 is ended, hot wastewater after shower is stored in the hot wastewater tank 1003. Because, in general, the temperature of hot water used in shower is about 40 °C to 45 °C, the temperature of hot wastewater after shower is 35 °C, for example.

When the use of the terminal 1001 is ended, the device control unit 113 switches the flow switching device 32 such that the utilization pump 31 and the heat receiving heat exchanger 9 for recovery communicate with each other in step S3. The device control unit 113 also drives the utilization pump 31 and the terminal pump 41 in step S4. Thus, the terminal fluid having a temperature of 42 °C circulates in the terminal circuit.

Meanwhile, the recovery fluid in the recovery circuit flows into the terminal heat exchanger 8 and exchanges heat with the terminal fluid, thereby receiving heat from the terminal fluid. Then, the recovery fluid whose temperature has reached a temperature of 37 °C, for example, flows out from the terminal heat exchanger 8 and flows into the heat receiving heat exchanger 9 for recovery. In this process, the residual heat of the terminal 1001 is transferred to the heat receiving heat exchanger 9 for recovery.

Next, the device control unit 113 "closes" the air expansion mechanism 12 in step S5 when the air expansion mechanism 12 is in an open state, and "opens" the expansion mechanism 14 for recovery in step S6. In step S7, the device control unit 113 drives the compressor 11. Thus, the refrigerant in the heat source unit 1 circulates in the recovery heat source circuit. In the recovery heat source circuit, the refrigerant exchanges heat with the recovery fluid in the heat receiving heat exchanger 9 for recovery, thereby receiving heat from the recovery fluid and evaporating, and is then suctioned into the compressor 11. The device control unit 113 also drives the heat storage pump 21 in step S8. Thus, the heat storage fluid circulates in the heat storage circuit.

In the heat storage circuit, the heat storage fluid exchanges heat with the refrigerant in the heat source heat exchanger 6, thereby receiving heat from the refrigerant, and then flows into the heat storage heat exchanger 22. The heat storage fluid that has flowed into the heat storage heat exchanger 22 exchanges heat with the heat storage material 7a, thereby heating the heat storage material 7a, and then flows out from the heat storage heat exchanger 22. Thus, the residual heat of the terminal 1001 is recovered and stored in the heat storage tank 7, which houses the heat storage material 7a.

Here, for example, after heat of the recovery fluid is removed by the refrigerant, the recovery fluid having a temperature of 25 °C flows out from the heat receiving heat exchanger 9 for recovery and flows into the terminal heat exchanger 8. In general, when heat exchange is performed between refrigerant and liquid, it is preferable that an evaporation temperature of the refrigerant be lower than the temperature of the liquid by about 2 °C. For this reason, when the recovery fluid has a temperature of 25 °C in the heat receiving heat exchanger 9 for recovery, the evaporation temperature of the refrigerant is about 23 °C. Meanwhile, in general, when heat exchange is performed between refrigerant and air, it is preferable that an evaporation temperature of the refrigerant be lower than the temperature of the air by about 5 °C. For this reason, when the temperature of outdoor air is 7 °C, the evaporation temperature is preferably 2 °C.

Therefore, when the recovery fluid is used as a heat source, the evaporation temperature of the refrigerant is higher than that of a case where outdoor air having a temperature of 7 °C is used as a heat source. In addition, a power consumption of the compressor 11 generally becomes smaller as the evaporation temperature of the refrigerant becomes higher, and the efficiency is thus improved. Thus, when the recovery fluid is used as a heat source, heat can be stored in the heat storage material 7a more efficiently as compared with a case where outdoor air is used as a heat source.

As recovery of heat progresses, the temperature of the terminal fluid is lowered as the temperature of the residual heat of the terminal 1001 is lowered. Accordingly, the temperature of the recovery fluid is lowered. As a result, the evaporation temperature of the refrigerant in the heat receiving heat exchanger 9 for recovery is lowered as recovery of heat progresses. Meanwhile, because it is preferable that a temperature difference between the recovery fluid and the refrigerant in the heat receiving heat exchanger 9 for recovery be about 2 °C, when the temperature of the recovery fluid flowing out from the heat receiving heat exchanger 9 for recovery is lowered to 4 °C, for example, the evaporation temperature of the refrigerant is 2 °C.

When the recovery of heat from the residual heat of the terminal 1001 is continued, the evaporation temperature is further lowered, and thus the heat storage efficiency is degraded. Therefore, in Embodiment 2, when the evaporation temperature is less than or equal to a value obtained by subtracting the set value $\alpha$ from the outdoor air temperature (evaporation temperature $\leq$ outdoor air temperature - $\alpha$), recovery processing of the residual heat of the hot wastewater tank 1003 is performed.

In step S29, the arithmetic unit 112 determines whether or not "evaporation temperature $\leq$ outdoor air temperature - $\alpha$" is satisfied based on the outdoor air temperature detected by the outdoor air temperature sensor 15 and the evaporation temperature of the refrigerant in the heat receiving heat exchanger 9 for recovery detected by the evaporation temperature sensor 16.

When the determination result indicates that "evaporation temperature $\leq$ outdoor air temperature - $\alpha$" is satisfied (YES in step S29), the process proceeds to step S30. Meanwhile, when "evaporation temperature > outdoor air temperature - $\alpha$" is satisfied (NO in step S29), the process of step S29 is repeated until the condition of "evaporation temperature $\leq$ outdoor air temperature - $\alpha$" is obtained.

In step S30, the device control unit 113 switches the first hot wastewater flow switching device 71 such that the hot wastewater tank 1003 and the terminal pump 41 communicate with each other. In step S31, the device control unit 113 switches the second hot wastewater flow switching device 72 such that the hot wastewater tank 1003 and the terminal heat exchanger 8 communicate with each other. Thus, hot wastewater having residual heat of the hot wastewater tank 1003 circulates in the hot wastewater circuit, and the heat recovery apparatus 200 can recover the residual heat of the hot wastewater after recovering the residual heat of the terminal 1001. Note that the processing of step S30 and the processing of step S31 may be performed in reverse order or may be performed simultaneously.

At this time, because the temperature of the hot wastewater circulating in the hot wastewater circuit is 35 °C, the evaporation temperature of the refrigerant that exchanges heat with the recovery fluid at the heat receiving heat exchanger 9 for recovery is increased again. As a result, the heat recovery apparatus 200 can store heat in the heat storage material 7a with an improved efficiency.

As recovery of heat from the hot wastewater progresses, the temperature of the hot wastewater circulating in the hot wastewater circuit is lowered as the temperature of the residual heat of the hot wastewater tank 1003 is lowered. Accordingly, the temperature of the recovery fluid is lowered. As a result, the evaporation temperature of the refrigerant in the heat receiving heat exchanger 9 for recovery is lowered as recovery of heat progresses. Meanwhile, because it is preferable that a temperature difference between the recovery fluid and the refrigerant in the heat receiving heat exchanger 9 for recovery be about 2 °C, when the temperature of the recovery fluid flowing out from the heat receiving heat exchanger 9 for recovery is lowered to 4 °C, for example, the evaporation temperature of the refrigerant is 2 °C.

As described in Embodiment 1, when the recovery of heat from the residual heat of the hot wastewater tank 1003 is continued, the evaporation temperature is further lowered, and thus the heat storage efficiency is degraded. At this time, when heat is received from outdoor air having a temperature of 7 °C, for example, the evaporation temperature can be kept at 2 °C, and thus lowering of the evaporation temperature can be avoided. This is because outdoor air has an enormous heat capacity and the temperature of the outdoor air is not lowered even when heat is removed from the outdoor air. Therefore, the evaporation temperature is not lowered.

Accordingly, in step S32, the arithmetic unit 112 determines whether or not "evaporation temperature $\leq$ outdoor air temperature - $\alpha$" is satisfied based on the outdoor air temperature detected by the outdoor air temperature sensor 15 and the evaporation temperature of the refrigerant in the heat receiving heat exchanger 9 for recovery detected by the evaporation temperature sensor 16.

When the determination result indicates that "evaporation temperature $\leq$ outdoor air temperature - $\alpha$" is satisfied (YES in step S32), the process proceeds to step S33. Meanwhile, when "evaporation temperature > outdoor air temperature - $\alpha$" is satisfied (NO in step S32), the process of step S32 is repeated until the condition of "evaporation temperature $\leq$ outdoor air temperature - $\alpha$" is obtained.

In step S33, the device control unit 113 "opens" the air expansion mechanism 12.

In step S34, the device control unit 113 "closes" the expansion mechanism 14 for recovery. As a result, the recovery heat source circuit is blocked, and the refrigerant is caused to circulate in the air heat source circuit. In this manner, the heat recovery operation using heat of outdoor air is performed.

As described above, by opening and closing the air expansion mechanism 12 and the expansion mechanism 14 for recovery by the device control unit 113 so as to cause the refrigerant to receive heat from outdoor air, a decrease in the evaporation temperature can be prevented and thus degradation in the efficiency can be prevented. Furthermore, because reception of heat from outdoor air is set to be performed after the residual heat of the terminal 1001 and the residual heat of the hot wastewater tank 1003 are recovered, reception of heat from outdoor air can be prevented from being performed in a state where the residual heat of the terminal 1001 and the residual heat of the hot wastewater tank 1003 are still present. As a result, the residual heat can be recovered thoroughly.

As described above, the heat recovery apparatus 200 according to Embodiment 2 further includes the hot water supply heat exchanger 62 housed in the heat storage tank 7, and the hot water supply terminal 1002, to which tap water that has flowed from the hot water supply heat exchanger 62 is supplied via the hot water supply pipe 60B. With this configuration, a hot water tank or a similar device that stores hot water to be supplied to the hot water supply terminal 1002 is not required, and thus the heat recovery apparatus 200 can be made smaller.

The heat recovery apparatus 200 further includes the hot wastewater tank 1003 and the hot wastewater circuit, which is formed by including the first hot wastewater pipe 70A, the second hot wastewater pipe 70B, and a part of the terminal pipe 40. The hot wastewater circuit is further provided with the first hot wastewater flow switching device 71 and the second hot wastewater flow switching device 72. With this configuration, because a part of the terminal circuit is used as the hot wastewater circuit, the circuit configuration can be simplified and the heat recovery apparatus 200 can thus be made smaller.

In the heat recovery apparatus 200, when use of the terminal 1001 is ended, the expansion mechanism 14 for recovery is opened, and the air expansion mechanism 12 is closed when the air expansion mechanism 12 is in an open state. Furthermore, when the evaporation temperature is less than a value obtained by subtracting the set temperature $\alpha$ from the outdoor air temperature, the first hot wastewater flow switching device 71 is switched such that the hot wastewater tank 1003 and the terminal pump 41 communicate with each other, and the second hot wastewater flow switching device 72 is switched such that the hot wastewater tank 1003 and the terminal heat exchanger 8 communicate with each other. Therefore, after the residual heat of the terminal 1001 is recovered, the residual heat of the hot wastewater is further recovered. Thus, the residual heat can be recovered efficiently.

In addition, in the heat recovery apparatus 200, when the evaporation temperature is less than a value obtained by subtracting the set temperature $\alpha$ from the outdoor air temperature, the expansion mechanism 14 for recovery is closed and the air expansion mechanism 12 is opened. Therefore, because heat of outdoor air can be received in addition to the residual heat of the terminal 1001 and the residual heat of the hot wastewater, the heat storage efficiency can be further improved.

Although the heat recovery apparatus of each of preferred Embodiments 1 and 2 has been explained above, the heat recovery apparatus is not limited to those of Embodiments 1 and 2 described above. Various modifications and applications are feasible without departing from the scope of the invention as defined in the claims. For example, regarding the heat storage fluid, the utilization fluid, the recovery fluid, and the terminal fluid, at least two or more of the fluids may be the same type of fluid, or all of the fluids may be of different types. For example, when all of the fluids are the same type of fluid, the cost can be reduced.

In Embodiments 1 and 2, the heat recovery processing is started in accordance with the instruction indicating an end of use of the terminal 1000 or the terminal 1001. However, the heat recovery processing may be started in accordance with an instruction for starting the heat recovery processing. That is, any method can be used as long as the user can instruct the heat recovery apparatus to start the heat recovery processing when use of the terminal 1000 or the terminal 1001 is ended.

## LIST OF REFERENCE SIGNS

| | |
|---|---|
| 1 | heat source unit |
| 2 | heat storage unit |
| 3 | utilization unit |
| 4 | terminal unit |
| 5 | recovery unit |
| 6 | heat source heat exchanger |
| 7 | heat storage tank |
| 7a | heat storage material |
| 8 | terminal heat exchanger |
| 9 | heat receiving heat exchanger for recovery |
| 10A | air heat source pipe |
| 10B | recovery heat source pipe |
| 11 | compressor |

| 12 | air expansion mechanism |
| 13 | air heat receiving heat exchanger |
| 14 | expansion mechanism for recovery |
| 15 | outdoor air temperature sensor |
| 16 | evaporation temperature sensor |
| 20 | heat storage pipe |
| 21 | heat storage pump |
| 22 | heat storage heat exchanger |
| 30 | utilization pipe |
| 31 | utilization pump |
| 32 | flow switching device |
| 33 | utilization heat exchanger |
| 40 | terminal pipe |
| 41 | terminal pump |
| 50 | recovery pipe |
| 60A | water supply pipe |
| 60B | hot water supply pipe |
| 61 | water supply end |
| 62 | hot water supply heat exchanger |
| 70A | first hot wastewater pipe |
| 70B | second hot wastewater pipe |
| 71 | first hot wastewater flow switching device |
| 72 | second hot wastewater flow switching device |
| 100 | heat recovery apparatus |
| 101 | processing circuit |
| 102 | processor |
| 103 | memory |
| 110 | controller |
| 111 | temperature acquisition unit |
| 112 | arithmetic unit |
| 113 | device control unit |
| 114 | storage unit |
| 120 | input device |
| 200 | heat recovery apparatus |
| 206 | hot water supply unit |
| 207 | hot wastewater unit |
| 1000 | terminal |
| 1001 | terminal |
| 1002 | hot water supply terminal |
| 1003 | hot wastewater tank |

**Claims**

1. A heat recovery apparatus (100, 200) configured to recover residual heat of a terminal (1000, 1001) that is connected to the heat recovery apparatus (100, 200) and utilizes heat, the heat recovery apparatus (100, 200) comprising:

   - a terminal circuit to which the terminal (1000, 1001) is connected and configured to supply heat to the terminal (1000, 1001) by allowing terminal fluid to circulate in the terminal circuit;
   - a recovery circuit in which recovery fluid circulates and configured to recover residual heat of the terminal (1000, 1001);
   - a heat source circuit in which refrigerant circulates and configured to generate heat by using heat recovered in the recovery circuit;
   - a heat storage circuit in which heat storage fluid circulates and configured to reject the heat generated in the heat source circuit to a heat storage material (7a); and
   - a heat storage tank (7) that houses the heat storage material (7a);
   - a utilization circuit in which a utilization heat exchanger (33), a terminal heat exchanger (8), and a utilization pump (31) are connected by a utilization pipe (30) and in which utilization fluid circulates,

- the utilization heat exchanger (33) being configured to cause the utilization fluid to receive heat from the heat storage material (7a),
- the terminal heat exchanger (8) being configured to cause the utilization fluid and the terminal fluid to exchange heat with each other,
- the utilization pump (31) being configured to cause the utilization fluid to circulate,
- the heat storage material (7a) including at least a latent heat storage material or a high-polymer heat storage material,

the recovery circuit being formed by including
the utilization pump (31),
a heat receiving heat exchanger (9) for recovery configured to cause the recovery fluid to reject heat to the refrigerant,
the terminal heat exchanger (8),

- a recovery pipe (50) that connects a point between the utilization heat exchanger (33) and the utilization pump (31) and a point between the utilization heat exchanger (33) and the terminal heat exchanger (8), and
a part of the utilization pipe (30).

2. The heat recovery apparatus (100, 200) of claim 1,
wherein the recovery circuit is further provided with a flow switching device (32) at a point between the utilization heat exchanger (33) and the utilization pump (31) or at a point between the utilization heat exchanger (33) and the terminal heat exchanger (8).

3. The heat recovery apparatus (100, 200) of claim 2,
wherein the flow switching device (32) is configured to switch flow paths to cause the utilization pump (31) and the utilization heat exchanger (33) to communicate with each other when the utilization fluid flows in the utilization circuit, and to cause the utilization pump (31) and the heat receiving heat exchanger (9) for recovery to communicate with each other when the recovery fluid flows in the recovery circuit.

4. The heat recovery apparatus (100, 200) of claim 2 or 3,
wherein the utilization fluid and the recovery fluid are a same fluid.

5. The heat recovery apparatus (100, 200) of any one of claims 2 to 4,
wherein the flow switching device (32) is configured to switch flow paths to cause the utilization pump (31) and the heat receiving heat exchanger (9) for recovery to communicate with each other when use of the terminal (1000, 1001) is ended.

6. The heat recovery apparatus (100, 200) of any one of claims 1 to 5,

wherein the terminal circuit is formed by including
a terminal pump (41) configured to cause the terminal fluid to circulate, and
a terminal pipe (40) that connects the terminal pump (41), the terminal heat exchanger (8), and the terminal (1000, 1001).

7. The heat recovery apparatus (100, 200) of any one of claims 1 to 6,

wherein the heat source circuit further includes

- a compressor (11) configured to compress the refrigerant,
- a heat source heat exchanger (6) configured to cause the heat storage fluid to receive heat from the compressed refrigerant, and
- an expansion mechanism (14) for recovery configured to expand the refrigerant that has flowed out from the heat source heat exchanger (6), and

the heat receiving heat exchanger (9) for recovery is configured to cause the recovery fluid to reject heat to the refrigerant that has flowed out from the expansion mechanism (14) for recovery.

8. The heat recovery apparatus (100, 200) of claim 7,

wherein the heat source circuit further includes

- an air expansion mechanism (12) configured to expand the refrigerant that has flowed out from the heat source heat exchanger (6), and
- an air heat receiving heat exchanger (13) configured to cause the refrigerant that has flowed out from the air expansion mechanism (12) to receive heat from outdoor air.

9. The heat recovery apparatus (100, 200) of claim 7 or 8,
wherein the expansion mechanism (14) for recovery is opened when use of the terminal (1000, 1001) is ended.

10. The heat recovery apparatus (100, 200) of claim 8 or 9,
further comprising:

- an outdoor air temperature sensor (15) configured to detect an outdoor air temperature of the outdoor air; and
- an evaporation temperature sensor (16) configured to detect an evaporation temperature of the refrigerant in the heat receiving heat exchanger (9) for recovery,

wherein the expansion mechanism (14) for recovery is closed and the air expansion mechanism (12) is opened when the evaporation temperature is less than a value obtained by subtracting a set temperature from the outdoor air temperature.

11. The heat recovery apparatus (100, 200) of any one of claims 1 to 10, further comprising

a hot water supply heat exchanger (62) configured to cause fluid that has flowed into the hot water supply heat exchanger (62) via a water supply pipe (60A) to receive heat from the heat storage material (7a),
wherein the fluid flowing out from the hot water supply heat exchanger (62) is supplied to a hot water supply terminal (1002) via a hot water supply pipe (60B).

12. The heat recovery apparatus (100, 200) of claim 11 as dependent on claim 6, further comprising:

- a hot wastewater tank (1003) that stores hot wastewater that is hot water after use in the hot water supply terminal (1002) or the terminal (1001); and
- a hot wastewater circuit in which the hot wastewater circulates, being formed by including a first hot wastewater pipe (70A) that connects a point between the terminal pump (41) and the terminal (1001) and the hot wastewater tank (1003), a second hot wastewater pipe (70B) that connects a point between the terminal heat exchanger (8) and the terminal (1001) and the hot wastewater tank (1003), and a part of the terminal pipe (40).

13. The heat recovery apparatus (100, 200) of claim 12,

wherein the hot wastewater circuit further includes
a first hot wastewater flow switching device (71) installed between the terminal pump (41) and the terminal (1001), and
a second hot wastewater flow switching device (72) installed between the terminal heat exchanger (8) and the terminal (1001).

14. The heat recovery apparatus (100, 200) of claim 13,
further comprising:

- an outdoor air temperature sensor (15) configured to detect an outdoor air temperature of outdoor air; and
- an evaporation temperature sensor (16) configured to detect an evaporation temperature of the refrigerant in the heat receiving heat exchanger (9) for recovery,
wherein the heat source circuit further includes
- a compressor (11) configured to compress the refrigerant,
a heat source heat exchanger (6) configured to cause the heat storage fluid to receive heat from the compressed refrigerant, and
- an expansion mechanism (14) for recovery configured to expand the refrigerant that has flowed out from the heat source heat exchanger (6),

the expansion mechanism (14) for recovery is opened when use of the terminal (1001) is ended, and the first hot wastewater flow switching device (71) is switched to cause the hot wastewater tank (1003) and the terminal pump (41) to communicate with each other and the second hot wastewater flow switching device (72) is switched to cause the hot wastewater tank (1003) and the terminal heat exchanger (8) to communicate with each other when the evaporation temperature is less than a value obtained by subtracting a set temperature from the outdoor air temperature.

15. The heat recovery apparatus (100, 200) of claim 14,

wherein the heat source circuit further includes
an air expansion mechanism (12) configured to expand the refrigerant that has flowed out from the heat source heat exchanger (6), and
the expansion mechanism (14) for recovery is closed and the air expansion mechanism (12) is opened when the evaporation temperature is less than a value obtained by subtracting a set temperature from the outdoor air temperature.


**Patentansprüche**

1. Ein Wärmerückgewinnungsgerät (100, 200) konfiguriert zur Rückgewinnung von Restwärme eines Terminals (1000, 1001), welches mit dem Wärmerückgewinnungsgerät (100, 200) verbunden ist, und welches die Restwärme nutzt, wobei das Wärmerückgewinnungsgerät umfasst:

- einen Terminal-Kreislauf, mit welchem das Terminal (1000, 1001) verbunden ist, der dazu konfiguriert ist Wärme an das Terminal (1000, 1001) bereitzustellen, in dem er einer Terminal-Flüssigkeit erlaubt im Terminal-Kreislauf zu zirkulieren;
- einen Rückgewinnungskreislauf, in welchem Rückgewinnungsflüssigkeit zirkuliert, der dazu konfiguriert ist Restwärme des Terminals (1000, 1001) rückzugewinnen;
- einen Wärmequellenkreislauf, in welchem Kältemittel zirkuliert, der dazu konfiguriert ist Wärme zu generieren, indem er zurück gewonnene Wärme aus dem Rückgewinnungskreislauf verwendet;
- einen Wärmespeicherkreislauf, in welchem Wärmespeicherflüssigkeit zirkuliert, der dazu konfiguriert ist, Wärme, welche in dem Wärmequellenkreislauf generiert wurde, an ein Wärmespeichermaterial (7a) zurückzuweisen;
und
- einen Wärmespeichertank (7) der das Wärmespeichermaterial (7a) einhaust;
- einen Verwertungskreislauf, in welchem ein Verwertungs-Wärmetauscher (33), ein Terminal-Wärmetauscher (8) und eine Verwertungspumpe (31) miteinander durch ein Verwertungsrohr (30) verbunden sind, in dem Verwertungsflüssigkeit zirkuliert,
- wobei der Verwertungs-Wärmetauscher (33) dazu konfiguriert ist, zu verursachen, dass die Verwertungsflüssigkeit Wärme vom Wärmespeichermaterial (7a) aufnimmt,
- wobei die Verwertungspumpe (31) dazu konfiguriert ist, eine Zirkulation der Verwertungsflüssigkeit zu verursachen,
- wobei das Wärmespeichermaterial (7a) mindestens ein Latentwärmematerial oder ein hochpolymeres Wärmespeichermaterial umfasst,

wobei der der Rückgewinnungskreislauf gebildet wird durch
Inklusion der Verwertungspumpe (31), einen wärmeaufnehmenden Wärmetauscher (9) zur Rückgewinnung, der so konfiguriert ist, dass die Rückgewinnungsflüssigkeit Wärme an das Kältemittel abgibt, und den Terminal-Wärmetauscher (8),

- ein Rückgewinnungsrohr (50), welches einen Punkt zwischen dem Verwertungs-Wärmetauscher (33) und der Verwertungspumpe (31) und einen Punkt zwischen dem Verwertungs-Wärmetauscher (33) und dem Terminal-Wärmetauscher (8) und einen Teil des Verwertungsrohrs (30) verbindet.

2. Das Wärmerückgewinnungsgerät (100, 200) gemäß Anspruch 1,
wobei der Rückgewinnungskreislauf weiter mit einer Flussschaltungsvorrichtung (32) ausgestattet ist, an einem Punkt zwischen dem Verwertungs-Wärmetauscher (33) und der Verwertungspumpe (31), oder an einem Punkt zwischen dem Verwertungs-Wärmetauscher (33) und dem Terminal-Wärmetauscher (8).

3. Das Wärmerückgewinnungsgerät (100, 200) gemäß Anspruch 2, wobei die Flussschaltungsvorrichtung (32) dazu konfiguriert ist, zwischen Flusspfaden zu schalten, um die Verwertungspumpe (31) und den Verwertungs-Wärmetauscher (33) miteinander zu verbinden, wenn die Verwertungsflüssigkeit in dem Verwertungskreislauf fließt, und um die Verwertungspumpe (31) und den wärmeaufnehmenden Wärmetauscher (9) zur Rückgewinnung miteinander zu verbinden, wenn die Rückgewinnungsflüssigkeit in dem Rückgewinnungskreislauf fließt.

4. Das Wärmerückgewinnungsgerät (100, 200) gemäß Anspruch 2 oder 3,
wobei die Verwertungsflüssigkeit und die Rückgewinnungsflüssigkeit dieselbe Flüssigkeit sind.

5. Das Wärmerückgewinnungsgerät (100, 200) gemäß einem der Ansprüche 2 bis 4, wobei die Flussschaltungsvorrichtung (32) dazu konfiguriert ist, zwischen Flusspfaden zu schalten, um die Verwertungspumpe (31) und den wärmeaufnehmenden Wärmetauscher (9) zur Rückgewinnung miteinander zu verbinden, wenn die Verwendung des Terminals (1000, 1001) beendet wird.

6. Das Wärmerückgewinnungsgerät (100, 200) gemäß einem der Ansprüche 1 bis 5, wobei der Terminal-Kreislauf gebildet wird durch die Inklusion einer Terminal-Pumpe (41), welche dazu konfiguriert ist die Zirkulation von Terminalflüssigkeit zu verursachen, und eines Terminal-Rohrs (40), welches die Terminal-Pumpe (41), den Terminal-Wärmetauscher (8) und das Terminal (1000, 1001) verbindet.

7. Das Wärmerückgewinnungsgerät (100, 200) gemäß einem der Ansprüche 1 bis 6, wobei der Wärmequellenkreislauf weiter umfasst:

- einen Kompressor (11), der dazu konfiguriert ist das Kältemittel zu komprimieren,
- einen Wärmequellen-Wärmetauscher (6), der dazu konfiguriert ist, zu verursachen, dass die Wärmespeicherflüssigkeit Wärme von dem komprimierten Kältemittel aufnimmt, und
- ein Expansionsmechanismus (14) zur Rückgewinnung, der dazu konfiguriert ist, dass Kältemittel, welches aus dem Wärmequellen-Wärmetauscher (6) heraus geströmt ist, zu expandieren und der wärmeaufnehmende Wärmetauscher (9) zur Rückgewinnung, dazu konfiguriert ist, zu verursachen, dass die Rückgewinnungsflüssigkeit Wärme an das Kältemittel abgibt, welches aus dem Expansionsmechanismus (14) zur Rückgewinnung ausgeströmt ist.

8. Das Wärmerückgewinnungsgerät (100, 200) gemäß Anspruch 7,
wobei der Wärmequellenkreislauf weiter umfasst:

- einen Luft-Expansionsmechanismus (12) zur Rückgewinnung, der dazu konfiguriert ist, dass Kältemittel zu expandieren, welches aus dem Wärmequelle-Wärmetauscher (6) ausgeströmt ist, und
- einen luftwärmeaufnehmenden Wärmetauscher (13), der dazu konfiguriert ist, zu verursachen, dass Kältemittel, welches aus dem Luft-Expansionsmechanismus (12) ausgeströmt ist, Wärme von der Außenluft aufnimmt.

9. Das Wärmerückgewinnungsgerät (100, 200) gemäß Anspruch 7 oder 8,
wobei der Expansionsmechanismus (14) zur Rückgewinnung geöffnet wird, wenn die Benutzung des Terminals (1000, 1001) beendet wird.

10. Das Wärmerückgewinnungsgerät (100, 200) gemäß Anspruch 8 oder 9, weiter umfassend:

- einen Außenluft-Temperatursensor (15), der dazu konfiguriert ist, eine Temperatur der Außenluft zu ermitteln; und
- einen Verdampfungstemperatur-Sensor (16), der dazu konfiguriert ist, eine Verdampfungstemperatur des Kältemittels in dem wärmeaufnehmenden Wärmetauscher (9) zur Rückgewinnung zu bestimmen,

wobei der Expansionsmechanismus (14) zur Rückgewinnung geschlossen und der Luft-Expansionsmechanismus (12) geöffnet wird, wenn die Verdampfungstemperatur kleiner als ein Wert ist, der durch die Subtraktion einer gesetzten Temperatur von der Außentemperatur ermittelt wird.

11. Das Wärmerückgewinnungsgerät (100, 200) gemäß einem der Ansprüche 1 bis 10 weiter umfassend:
einen Heißwasser-bereitstellungs-Wärmetauscher (62), der dazu konfiguriert ist, zu verursachen das Flüssigkeit, welche in den Heißwasser-bereitstellungs-Wärmetauscher (62) über ein Wasser-Bereitstellungsrohr (60 A) geströmt ist, wärme von dem Wärmespeichermaterial (7a) aufnimmt, wobei die Flüssigkeit, welche aus dem Heißwasser-bereitstellungs-Wärmetauscher (62) fließt, über ein Heißwasser-Bereitstellungsrohr (60 B) einem Heißwasser-Bereitstellungsterminal (1002) bereitgestellt wird.

**12.** Das Wärmerückgewinnungsgerät (100, 200) gemäß Anspruch 11, wie vom Anspruch 6 abhängig, weiter umfassend:

- einen Heiß-Abwasser Tank (1003) der heißes Abwasser speichert, welches heiß ist nach der Verwendung im Heißwasser-Bereitstellungsterminal (1002) oder dem Terminal (1001); und
- einen Heiß-Abwasserkreislauf, in dem das heiße Abwasser zirkuliert, der gebildet wird durch die Bereitstellung eines ersten Heiß-Abwasserrohrs (70A), welches einen Punkt zwischen der Terminal-Pumpe (41) und dem Terminal (1001) und dem Heiß-Abwasser Tank (1003) verbindet, eines zweiten Heiß-Abwasserrohrs (70B), welches einen Punkt zwischen dem Terminal-Wärmetauscher (8) und dem Terminal (1001) und den Heiß-Abwasser Tank (1003) und einen Teil des Terminalrohrs (40) verbindet.

**13.** Das Wärmerückgewinnungsgerät (100, 200) gemäß Anspruch 12,
wobei der Heiß-Abwasserkreislauf weiter umfasst:
eine erste Heiß-Abwasser Flussschaltungsvorrichtung (71), welche zwischen der Terminal-Pumpe (41) und dem Terminal (1001) installiert ist, und eine zweite Heiß-Abwasser Flussschaltungsvorrichtung (72), welche zwischen dem Terminal-Wärmetauscher (8) und dem Terminal (1001) installiert ist.

**14.** Das Wärmerückgewinnungsgerät (100, 200) gemäß Anspruch 13 weiter umfassend:

- einen Außenluft-Temperatursensor (15), der dazu konfiguriert ist, eine Temperatur der Außenluft zu ermitteln; und
- einen Verdampfungstemperatur-Sensor (16), der dazu konfiguriert ist, eine Verdampfungstemperatur des Kältemittels in dem wärmeaufnehmenden Wärmetauscher (9) zur Rückgewinnung zu bestimmen,

wobei der Wärmequellenkreislauf weiter umfasst:

- einen Kompressor (11), der dazu konfiguriert ist, dass Kältemittel zu komprimieren, einen Wärmequellen-Wärmetauscher (6), der dazu konfiguriert ist, zu verursachen, dass die Wärmespeicherflüssigkeit Wärme von dem komprimierten Kältemittel aufnimmt, und
- ein Expansionsmechanismus (14) zur Rückgewinnung, der dazu konfiguriert ist, dass Kältemittel, welches aus dem Wärmequellen-Wärmetauscher (6) heraus geströmt ist, zu expandieren, wobei der Expansionsmechanismus (14) zur Rückgewinnung geöffnet wird, wenn die Benutzung des Terminals (1001) beendet wird, und

die erste Heiß-Abwasser Flussschaltungsvorrichtung (71) geschaltet wird, um zu bewirken, dass der Heiß-Abwasser Tank (1003) und die Terminal-Pumpe (41) miteinander verbunden werden und die zweite Heiß-Abwasser Flussschaltungsvorrichtung (72) geschaltet wird, um zu bewirken, dass der Heiß-Abwassertank (1003) und der Terminal-Wärmetauscher (8) miteinander verbunden werden, wenn die Verdampfungstemperatur kleiner als ein Wert ist, der durch die Subtraktion einer gesetzten Temperatur von der Außentemperatur ermittelt wird.

**15.** Das Wärmerückgewinnungsgerät (100, 200) gemäß Anspruch 14,
wobei der Wärmequellenkreislauf weiter umfasst:
einen Luft-Expansionsmechanismus (12), der dazu konfiguriert ist, das Kältemittel zu expandieren, welches aus dem Wärmequellen-Wärmetauscher (6) ausgeströmt ist, und der Expansionsmechanismus (14) zur Rückgewinnung geschlossen wird und der Luft-Expansionsmechanismus (12) geöffnet wird, wenn die Verdampfungstemperatur kleiner als ein Wert ist, der durch die Subtraktion einer gesetzten Temperatur von der Temperatur von der Außentemperatur ermittelt wird.

## Revendications

**1.** Appareil de récupération de chaleur (100, 200) configuré pour récupérer une chaleur résiduelle d'un terminal (1000, 1001) qui est connecté à l'appareil de récupération de chaleur (100, 200) et qui utilise de la chaleur, l'appareil de récupération de chaleur (100, 200) comprenant :

- un circuit de terminal auquel le terminal (1000, 1001) est connecté, et qui est configuré pour alimenter de la chaleur au terminal (1000, 1001) en permettant à un fluide de terminal de circuler dans le circuit de terminal ;
- un circuit de récupération dans lequel un fluide de récupération circule, et qui est configuré pour récupérer une chaleur résiduelle du terminal (1000, 1001) ;
- un circuit de source de chaleur dans lequel un réfrigérant circule, et qui est configuré pour générer de la chaleur en utilisant de la chaleur récupérée dans le circuit de récupération ;
- un circuit de stockage de chaleur dans lequel un fluide de stockage de chaleur circule, et qui est configuré pour rejeter la chaleur générée dans le circuit de source de chaleur vers un matériau de stockage de chaleur (7a) ; et
- un réservoir de stockage de chaleur (7) qui renferme le matériau de stockage de chaleur (7a) ;
- un circuit d'utilisation dans lequel un échangeur de chaleur d'utilisation (33), un échangeur de chaleur de terminal (8), et une pompe d'utilisation (31) sont connectés par un tube d'utilisation (30) et dans lequel un fluide d'utilisation circule,
- l'échangeur de chaleur d'utilisation (33) étant configuré pour amener le fluide d'utilisation à recevoir de la chaleur provenant du matériau de stockage de chaleur (7a),
- l'échangeur de chaleur de terminal (8) étant configuré pour amener le fluide d'utilisation et le fluide de terminal à échanger de chaleur l'un avec l'autre,
- la pompe d'utilisation (31) étant configurée pour amener le fluide d'utilisation à circuler,
- le matériau de stockage de chaleur (7a) incluant au moins un matériau de stockage de chaleur latent ou un matériau de stockage de chaleur haut-polymère,
- le circuit de récupération étant formé en incluant
- la pompe d'utilisation (31),
- un échangeur de chaleur de réception de chaleur (9) pour récupération configuré pour amener le fluide de récupération à rejeter de la chaleur vers le réfrigérant,
- l'échangeur de chaleur de terminal (8),
- un tube de récupération (50) qui connecte un point entre l'échangeur de chaleur d'utilisation (33) et la pompe d'utilisation (31) et un point entre l'échangeur de chaleur d'utilisation (33) et l'échangeur de chaleur de terminal (8), et
- une partie du tube d'utilisation (30).

2. Appareil de récupération de chaleur (100, 200) selon la revendication 1, dans lequel le circuit de récupération est en outre doté d'un dispositif de commutation d'écoulement (32) à un point entre l'échangeur de chaleur d'utilisation (33) et la pompe d'utilisation (31) ou à un point entre l'échangeur de chaleur d'utilisation (33) et l'échangeur de chaleur de terminal (8).

3. Appareil de récupération de chaleur (100, 200) selon la revendication 2, dans lequel le dispositif de commutation d'écoulement (32) est configuré pour commuter des trajets d'écoulement pour amener la pompe d'utilisation (31) et l'échangeur de chaleur d'utilisation (33) à communiquer l'un avec l'autre quand le fluide d'utilisation s'écoule dans le circuit d'utilisation, et pour amener la pompe d'utilisation (31) et l'échangeur de chaleur de réception de chaleur (9) pour récupération à communiquer l'un avec l'autre quand le fluide de récupération s'écoule dans le circuit de récupération.

4. Appareil de récupération de chaleur (100, 200) selon la revendication 2 ou 3,
dans lequel le fluide d'utilisation et le fluide de récupération sont un même fluide.

5. Appareil de récupération de chaleur (100, 200) selon l'une quelconque des revendications 2 à 4,
dans lequel le dispositif de commutation d'écoulement (32) est configuré pour commuter des trajets d'écoulement pour amener la pompe d'utilisation (31) et l'échangeur de chaleur de réception de chaleur (9) pour récupération à communiquer l'un avec l'autre lorsque l'utilisation du terminal (1000, 1001) est terminée.

6. Appareil de récupération de chaleur (100, 200) selon l'une quelconque des revendications 1 à 5,

dans lequel le circuit de terminal est formé en incluant une pompe de terminal (41) configurée pour amener le fluide de terminal à circuler, et
un tube de terminal (40) qui connecte la pompe de terminal (41), l'échangeur de chaleur de terminal (8), et le terminal (1000, 1001).

7. Appareil de récupération de chaleur (100, 200) selon l'une quelconque des revendications 1 à 6,

dans lequel le circuit de source de chaleur inclut en outre

- un compresseur (11) configuré pour comprimer le réfrigérant,
- un échangeur de chaleur de source de chaleur (6) configuré pour amener le fluide de stockage de chaleur à recevoir de la chaleur provenant du réfrigérant comprimé, et
- un mécanisme d'expansion (14) pour récupération configuré pour mettre en expansion le réfrigérant qui s'est écoulé hors de l'échangeur de chaleur de source de chaleur (6), et

l'échangeur de chaleur de réception de chaleur (9) pour récupération est configuré pour amener le fluide de récupération à rejeter de la chaleur vers le réfrigérant qui s'est écoulé hors du mécanisme d'expansion (14) pour récupération.

8. Appareil de récupération de chaleur (100, 200) selon la revendication 7, dans lequel le circuit de source de chaleur inclut en outre

- un mécanisme d'expansion à air (12) configuré pour mettre en expansion le réfrigérant qui s'est écoulé hors de l'échangeur de chaleur de source de chaleur (6), et
- un échangeur de chaleur de réception de chaleur à air (13) configuré pour amener le réfrigérant qui s'est écoulé hors du mécanisme d'expansion à air (12) à recevoir de la chaleur provenant d'un air externe.

9. Appareil de récupération de chaleur (100, 200) selon la revendication 7 ou 8,
dans lequel le mécanisme d'expansion (14) pour récupération est ouvert lorsque l'utilisation du terminal (1000, 1001) est terminée.

10. Appareil de récupération de chaleur (100, 200) selon la revendication 8 ou 9,
comprenant en outre :

- un capteur de température d'air externe (15) configuré pour détecter une température d'air externe de l'air externe ; et
- un capteur de température d'évaporation (16) configuré pour détecter une température d'évaporation du réfrigérant dans l'échangeur de chaleur de réception de chaleur (9) pour récupération,

dans lequel le mécanisme d'expansion (14) pour récupération est fermé et le mécanisme d'expansion à air (12) est ouvert quand la température d'évaporation est inférieure à une valeur obtenue en soustrayant une température de consigne de la température d'air externe.

11. Appareil de récupération de chaleur (100, 200) selon l'une quelconque des revendications 1 à 10,
comprenant en outre
un échangeur de chaleur d'alimentation d'eau chaude (62) configuré pour amener un fluide qui s'est écoulé jusque dans l'échangeur de chaleur d'alimentation d'eau chaude (62) via un tube d'alimentation d'eau (60A) à recevoir de la chaleur provenant du matériau de stockage de chaleur (7a), dans lequel le fluide s'écoulant hors de l'échangeur de chaleur d'alimentation d'eau chaude (62) est alimenté à un terminal d'alimentation d'eau chaude (1002) via un tube d'alimentation d'eau chaude (60B).

12. Appareil de récupération de chaleur (100, 200) selon la revendication 11 en dépendance de la revendication 6,
comprenant en outre :

- un réservoir d'eau chaude usée (1003) qui stocke de l'eau chaude usée qui est une eau chaude après utilisation dans le terminal d'alimentation d'eau chaude (1002) ou le terminal (1001) ; et
- un circuit d'eau chaude usée dans lequel l'eau chaude usée circule, qui est formé en incluant un premier tube d'eau chaude usée (70A) qui connecte un point entre la pompe de terminal (41) et le terminal (1001) et le réservoir d'eau chaude usée (1003), un second tube d'eau chaude usée (70B) qui connecte un point entre l'échangeur de chaleur de terminal (8) et le terminal (1001) et le réservoir d'eau chaude usée (1003), et une partie du tube de terminal (40).

13. Appareil de récupération de chaleur (100, 200) selon la revendication 12, dans lequel le circuit d'eau chaude usée inclut en outre

un premier dispositif de commutation d'écoulement d'eau chaude usée (71) installé entre la pompe de terminal (41) et le terminal (1001), et

un second dispositif de commutation d'écoulement d'eau chaude usée (72) installé entre l'échangeur de chaleur de terminal (8) et le terminal (1001).

14. Appareil de récupération de chaleur (100, 200) selon la revendication 13, comprenant en outre :

- un capteur de température d'air externe (15) configuré pour détecter une température d'air externe d'un air externe ; et
- un capteur de température d'évaporation (16) configuré pour détecter une température d'évaporation du réfrigérant dans l'échangeur de chaleur de réception de chaleur (9) pour récupération,
dans lequel le circuit de source de chaleur inclut en outre
- un compresseur (11) configuré pour comprimer le réfrigérant,
- un échangeur de chaleur de source de chaleur (6) configuré pour amener le fluide de stockage de chaleur à recevoir de la chaleur provenant du réfrigérant comprimé, et
- un mécanisme d'expansion (14) pour récupération configuré pour mettre en expansion le réfrigérant qui s'est écoulé hors de l'échangeur de chaleur de source de chaleur (6),

le mécanisme d'expansion (14) pour récupération étant ouvert quand une utilisation du terminal (1001) est terminée, et
le premier dispositif de commutation d'écoulement d'eau chaude usée (71) étant commuté pour amener le réservoir d'eau chaude usée (1003) et la pompe de terminal (41) à communiquer l'un avec l'autre et le second dispositif de commutation d'écoulement d'eau chaude usée (72) étant commuté pour amener le réservoir d'eau chaude usée (1003) et l'échangeur de chaleur de terminal (8) à communiquer l'un avec l'autre quand la température d'évaporation est inférieure à une valeur obtenue en soustrayant une température de consigne de la température d'air externe.

15. Appareil de récupération de chaleur (100, 200) selon la revendication 14, dans lequel le circuit de source de chaleur inclut en outre un mécanisme d'expansion à air (12) configuré pour mettre en expansion le réfrigérant qui s'est écoulé hors de l'échangeur de chaleur de source de chaleur (6), et

- le mécanisme d'expansion (14) pour récupération étant fermé et le mécanisme d'expansion à air (12) étant ouvert quand la température d'évaporation est inférieure à une valeur obtenue en soustrayant une température de consigne de la température d'air externe.

FIG. 1

## FIG. 2

## FIG. 3

## FIG. 4

FIG. 5

FIG. 6

FIG. 7

```
                    ┌──────────────┐
                    │    START     │
                    └──────┬───────┘
                           ▼
              ┌─────────────────────────┐  ⌐ S1
              │     PROVIDE END         │
              │  INSTRUCTION OF TERMINAL │
              └───────────┬─────────────┘
                          ▼
              ┌─────────────────────────┐  ⌐ S2
              │   STOP UTILIZATION PUMP  │
              │    AND TERMINAL PUMP     │
              └───────────┬─────────────┘
                          ▼
              ┌─────────────────────────┐  ⌐ S3
              │      SWITCH FLOW         │
              │   SWITCHING DEVICE       │
              └───────────┬─────────────┘
                          ▼
              ┌─────────────────────────┐  ⌐ S4
              │  DRIVE UTILIZATION PUMP  │
              │    AND TERMINAL PUMP     │
              └───────────┬─────────────┘
                          ▼
              ┌─────────────────────────┐  ⌐ S5
              │   CLOSE AIR EXPANSION    │
              │       MECHANISM          │
              └───────────┬─────────────┘
                          ▼
              ┌─────────────────────────┐  ⌐ S6
              │  OPEN EXPANSION MECHANISM │
              │      FOR RECOVERY        │
              └───────────┬─────────────┘
                          ▼
              ┌─────────────────────────┐  ⌐ S7
              │     DRIVE COMPRESSOR     │
              └───────────┬─────────────┘
                          ▼
              ┌─────────────────────────┐  ⌐ S8
              │   DRIVE HEAT STORAGE PUMP │
              └───────────┬─────────────┘
                          ▼◄──────────────────┐
                       ╱─────────╲  ⌐ S9       │
                      ╱ EVAPORATION╲            │
                     ╱ TEMPERATURE ≤ ╲   NO     │
                    ╱ OUTDOOR AIR TEMPERA-╲─────┘
                     ╲  TURE − α ?  ╱
                      ╲           ╱
                       ╲─────────╱
                          │ YES
                          ▼
              ┌─────────────────────────┐  ⌐ S10
              │    OPEN AIR EXPANSION    │
              │       MECHANISM          │
              └───────────┬─────────────┘
                          ▼
              ┌─────────────────────────┐  ⌐ S11
              │   CLOSE EXPANSION        │
              │ MECHANISM FOR RECOVERY   │
              └───────────┬─────────────┘
                          ▼
                    ┌──────────────┐
                    │     END      │
                    └──────────────┘
```

FIG. 8

EP 3 998 431 B1

## FIG. 9

```
                    ┌──────────┐
                    │  START   │
                    └────┬─────┘
                         ↓
            ┌─────────────────────────┐  S1
            │     PROVIDE END         │
            │ INSTRUCTION OF TERMINAL │
            └────────────┬────────────┘
                         ↓
            ┌─────────────────────────┐  S2
            │   STOP UTILIZATION PUMP │
            │   AND TERMINAL PUMP     │
            └────────────┬────────────┘
                         ↓
            ┌─────────────────────────┐  S3
            │      SWITCH FLOW        │
            │   SWITCHING DEVICE      │
            └────────────┬────────────┘
                         ↓
            ┌─────────────────────────┐  S4
            │  DRIVE UTILIZATION PUMP │
            │   AND TERMINAL PUMP     │
            └────────────┬────────────┘
                         ↓
            ┌─────────────────────────┐  S5
            │   CLOSE AIR EXPANSION   │
            │       MECHANISM         │
            └────────────┬────────────┘
                         ↓
            ┌─────────────────────────┐  S6
            │    OPEN EXPANSION       │
            │ MECHANISM FOR RECOVERY  │
            └────────────┬────────────┘
                         ↓
            ┌─────────────────────────┐  S7
            │    DRIVE COMPRESSOR     │
            └────────────┬────────────┘
                         ↓
            ┌─────────────────────────┐  S8
            │ DRIVE HEAT STORAGE PUMP │
            └────────────┬────────────┘
                         ↓ ←──────────────────┐
                      ╱────────╲  S29          │
                     ╱ EVAPORATION ╲   NO       │
                    ╱ TEMPERATURE ≤  ╲──────────┘
                    ╲ OUTDOOR AIR    ╱
                     ╲ TEMPERATURE-α?╱
                      ╲────────╱
                         ↓ YES
            ┌─────────────────────────┐  S30
            │ SWITCH FIRST HOT WASTEWATER │
            │   FLOW SWITCHING DEVICE  │
            └────────────┬────────────┘
                         ↓
            ┌─────────────────────────┐  S31
            │ SWITCH SECOND HOT WASTEWATER │
            │   FLOW SWITCHING DEVICE  │
            └────────────┬────────────┘
                         ↓ ←──────────────────┐
                      ╱────────╲  S32          │
                     ╱ EVAPORATION ╲   NO       │
                    ╱ TEMPERATURE ≤  ╲──────────┘
                    ╲ OUTDOOR AIR    ╱
                     ╲ TEMPERATURE-α?╱
                      ╲────────╱
                         ↓ YES
            ┌─────────────────────────┐  S33
            │   OPEN AIR EXPANSION    │
            │       MECHANISM         │
            └────────────┬────────────┘
                         ↓
            ┌─────────────────────────┐  S34
            │    CLOSE EXPANSION      │
            │ MECHANISM FOR RECOVERY  │
            └────────────┬────────────┘
                         ↓
                    ┌──────────┐
                    │   END    │
                    └──────────┘
```

**REFERENCES CITED IN THE DESCRIPTION**

**Patent documents cited in the description**

- JP H11211270 A

- JP 2010007935 A